# EUROPEAN PATENT APPLICATION

(11) **EP 4 498 713 A1**
(43) Date of publication of application: **29.01.2025**
(21) Application number: 23791249.8
(22) Date of filing: 19.04.2023
(51) Int. Cl.: H04W 4/44

(54) **AERIAL PLATFORM-BASED ROADSIDE SYSTEM**

(30) Priority: 22.04.2022 CN 202210430292
(71) Applicant: Sony Group Corporation, Tokyo 108-0075 (JP)
(72) Inventor: CUI, Tao, Beijing 100027 (CN); YU, Chunbo, Shanghai 200050 (CN)
(74) Representative: D Young & Co LLP
(86) International application number: PCT/CN2023/089092
(87) International publication number: WO 2023/202594

(57) **Abstract**

The present disclosure relates to an air platform-based road side system. According to an embodiment, there is provided an electronic device, comprising: a memory having thereon stored computer-executable instructions; and a processor coupled with the memory and configured to execute the computer-executable instructions to: when located within a first sub-area of at least one sub-area within coverage of an air platform-based road side system, receive a first virtual road side unit identifier from a first virtual road side unit in a first virtual road side infrastructure that serves the first sub-area.

## Description

### TECHNICAL FIELD

The present disclosure generally relates to communication technology, and more specifically, to an air platform-based road side system and an associated method, an electronic device, a virtual infrastructure management unit, and a computer program medium.

### BACKGROUND

A C-V2X (Cellular Vehicle-to-Everything) cellular Internet of Vehicles, as a vehicle radio communication technology evolved based on cellular communication technologies such as 4G/5G, includes communication between vehicle-mounted units, communication between a vehicle-mounted unit and a road side unit, communication between a vehicle-mounted unit and a pedestrian device, and communication between a vehicle-mounted unit and a network.

Road side infrastructures are generally fixed on traffic facilities on both sides of a road, but when a disaster such as earthquake and power blackout occurs, they may be all paralyzed. Furthermore, in some remote areas, such as mountains and forests, there are often no road side infrastructures provided.

Unmanned autonomous vehicles (e.g., unmanned fire trucks, unmanned ambulances, unmanned food transport vehicles, unmanned emergency rescue vehicles, etc. for maintaining basic operations of a city) are becoming increasingly popular, so that when all or part of road side infrastructures on the ground are paralyzed, emergency road side infrastructures are needed to guarantee orderly operations of these urban unmanned vehicles.

In addition, in case where there are no road side infrastructures in a field rescue expedition, forest disaster relief, geological exploration, etc., temporary emergency road side infrastructures may be also needed.

### SUMMARY

A brief summary of the present disclosure is presented herein to provide a basic understanding of some aspects of the present disclosure. However, it should be understood that this summary is not an exhaustive overview of the present disclosure. It is not intended to determine key or critical elements of the present disclosure or to limit the scope of the present disclosure . Its purpose is only to present certain concepts of the present disclosure in a simplified form as a prelude to the more detailed description to be presented later.

According to an aspect of the present disclosure, there is provided an electronic device, comprising: a memory having thereon stored computer-executable instructions; and a processor coupled with the memory and configured to execute the computer-executable instructions to: when located within a first sub-area of at least one sub-area within coverage of an air platform-based road side system (RSS), receive a first virtual road side unit (VRSU) identifier from a first VRSU in a first virtual road side infrastructure (VRSI) that serves the first sub-area.

In some embodiments, by virtualizing physical resources of a road side infrastructure of the RSS and allocating at least part of the virtualized physical resources for each sub-area of the at least one sub-area to deploy one VRSI for each sub-area, each VRSI comprises one VRSU, each VRSU comprising at least part of hardware resources and software resources of a road side unit (RSU) that are virtualized, each VRSU having a corresponding VRSU identifier, the at least one sub-area comprising the first sub-area.

In some embodiments, the first VRSU identifier is associated with a first VRSI identifier of the first VRSI and a first virtual road side computing control unit (VRSCCU) identifier, wherein the first VRSI comprises a first VRSCCU, the first VRSCCU comprising at least part of hardware resources and software resources of a road side computing control unit that are virtualized, and the first VRSU identifier, the first VRSI identifier, and the first VRSCCU identifier are allocated by a virtual infrastructure management unit (VIMU) of the RSS.

In some embodiments, a resource configuration associated with the first VRSU identifier or a resource configuration associated with the first VRSCCU identifier, which is allocated by the VIMU, comprises at least one of: a virtual CPU configuration, a virtual memory configuration, a virtual disk configuration, or a virtual network configuration.

In some embodiments, the first VRSI identifier, the first VRSU identifier, and the first VRSCCU identifier are, via a first interface message on an interface between the VIMU and an Internet of vehicles cloud control platform, reported by the VIMU to the Internet of vehicles cloud control platform.

In some embodiments, the at least one sub-area is determined by the VIMU by the following operation: at least based on map information related to a location of the RSS, determining the at least one sub-area within the coverage of the RSS where a VRSI needs to be deployed.

In some embodiments, the map information is, via a second interface message on an interface between the VIMU and an Internet of vehicles cloud control platform, received by the VIMU from the Internet of vehicles cloud control platform.

In some embodiments, the allocating at least part of the virtualized physical resources for each sub-area of the at least one sub-area to deploy one VRSI for each sub-area comprises the following operation performed by the VIMU: based on an application scenario for each sub-area of the at least one sub-area, allocating resources for the VRSI of the sub-area.

In some embodiments, the allocating at least part of the virtualized physical resources for each sub-area of the at least one sub-area to deploy one VRSI for each sub-area comprises the following operation performed by the VIMU: based on history data for each sub-area of the at least one sub-area, allocating resources for the VRSI of the sub-area.

In some embodiments, the first VRSU identifier is associated with a first VRSI identifier of the first VRSI and a first virtual road side infrastructure resource slice type, the first VRSU identifier, the first VRSI identifier, and the first virtual road side infrastructure resource slice type being allocated by the VIMU, and the virtual road side infrastructure resource slice type being allocated based on a resource requirement feature of the first sub-area.

In some embodiments, the VRSI identifier, the VRSU identifier, and the virtual road side infrastructure resource slice type are, via a third interface message on an interface between the VIMU and an Internet of Vehicles cloud control platform, reported by the VIMU to the Internet of Vehicles cloud control platform.

In some embodiments, the resource requirement feature of the first sub-area comprise at least one of: a latency requirement, a bandwidth requirement, a computing capability requirement, or a storage capability requirement.

In some embodiments, the virtual road side infrastructure resource slice type comprises one of: a balance type slice, a low-latency type slice, a large-bandwidth type slice, an intelligent computing type slice, a large-storage type slice, a high-positioning accuracy type slice, and high-reliability type slice.

In some embodiments, the processor is further configured to: transmit, to the first VRSU, travel information of a vehicle where the electronic device is mounted; and receive a pass scheduling message from the first VRSU, wherein the pass scheduling message comprises the first VRSU identifier, and the pass scheduling message comprises pass scheduling information based on the travel information transmitted by the electronic device and based on at least one of travel information of another vehicle transmitted by another electronic device, road side sensing information from the first VRSI, or traffic light information of a target intersection.

In some embodiments, the processor is further configured to: transmit a detection result to the first VRSU, the detection result comprising driving environment information detected by the electronic device via a sensing device; and receive a driving assistance message from the first VRSU, wherein the driving assistance message comprises the first VRSU identifier, and the driving assistance message comprises driving assistance information based on at least one of a detection result transmitted by another electronic device or the detection result of the first VRSU.

In some embodiments, the processor is further configured to: transmit, to the first VRSU, a message comprising the first VRSU identifier.

In some embodiments, the first VRSU reports, via a V2X.RSU.INFO.UP message and a V2X.RSU.RunningInfo.UP message on an interface between a RSU associated with the first VRSU and an Internet of Vehicles cloud control platform, business data and running information, respectively.

According to another aspect of the present disclosure, there is provided an air platform-based road side system (RSS), comprising: an air platform for a road side infrastructure (APRSI) comprising an air bearer facility and a road side infrastructure born on the air bearer facility and configured to virtualize physical resources of the road side infrastructure; and a virtual infrastructure management unit (VIMU) configured to allocate at least part of the virtualized physical resources for each sub-area of at least one sub-area within coverage of the RSS to deploy one VRSI for each sub-area, each VRSI at least comprising one virtual road side unit (VRSU), each VRSU comprising at least part of hardware and software resources of a road side unit (RSU) that are virtualized.

In some embodiments, each VRSI further comprises one virtual road side computing control unit (VRSCCU), the VRSCCU comprising at least part of hardware resources and software resources of a road side computing control unit that are virtualized.

In some embodiments, each VRSI comprises the VRSU, a virtual road side computing control unit (VRSCCU), a traffic control device, and a road side sensing device, wherein the VRSCCU is used for providing access of the traffic control device and the road side sensing device.

In some embodiments, the air bearer facility comprises a tethered aerostat and a supporting facility thereof.

In some embodiments, the road side infrastructure comprises one or more of the road side unit, the road side computing control unit, a traffic control device, and a road side sensing device.

In some embodiments, the VIMU is further configured to: at least based on map information related to a location of the RSS, determine the at least one sub-area within the coverage of the RSS where a VRSI needs to be deployed.

In some embodiments, the VIMU is further configured to: report, via a first interface message on an interface between the VIMU and an Internet of Vehicles cloud control platform, first system basic information to the Internet of Vehicles cloud control platform, the first system basic information comprising location information, a running status and a running mode of the RSS, and the running status indicating whether the RSS is in a virtual state; and receive, via a second interface message on the interface between the VIMU and the Internet of Vehicles cloud control platform, map information from the Internet of Vehicles cloud control platform, the map information being determined at least based on the location information of the RSS.

In some embodiments, the VIMU is further configured to: based on a resource requirement feature of each sub-area of the at least one sub-area, determine a virtual road side infrastructure resource slice type for the sub-area.

In some embodiments, the VIMU is further configured to: report, via a third interface message on an interface between the VIMU and an Internet of Vehicles cloud control platform, second system basic information, which comprises a VRSI identifier, as well as a virtual road side infrastructure resource slice type and a VRSU identifier that are associated with the VRSI identifier.

In some embodiments, the VIMU is further configured to: based on an application scenario for each sub-area of the at least one sub-area, allocate resources for the VRSI of the sub-area.

In some embodiments, the VIMU is further configured to: receive, via a fourth interface message on an interface between the VIMU and an Internet of vehicles cloud control platform, history data for each sub-area of the at least one sub-area from the Internet of vehicles cloud control platform; and based on the history data for each sub-area of the at least one sub-area, allocate resources for the VRSI of the sub-area.

In some embodiments, the VIMU is further configured to: report, via a fifth interface message on an interface between the VIMU and an Internet of vehicles cloud control platform, third system basic information, the third system basic information comprising the VRSI identifier, the associated VRSU identifier, an associated VRSCCU identifier, an associated road side sensing device identifier and an associated traffic control device identifier, and the third system basic information further comprising a VRSU resource configuration and a VRSCCU resource configuration, each of the VRSU resource configuration and the VRSCCU resource configuration comprising at least one of: a virtual CPU configuration, a virtual memory configuration, a virtual disk configuration, or a virtual network configuration.

In some embodiments, the VRSU is configured to report, via a V2X.RSU.INFO.UP message and a V2X.RSU.RunningInfo.UP message on an interface between the RSU associated with the VRSU and an Internet of Vehicles cloud control platform, business data and running information to the Internet of Vehicles cloud control platform, respectively.

In some embodiments, the VRSU is configured to transmit the VRSU identifier of the VRSU to an electronic device within the sub-area which the VRSU serves.

In some embodiments, the VRSU is configured to: receive, from the electronic device within the sub-area which the VRSU serves, travel information related to a vehicle where the electronic device is mounted; generate pass scheduling information based on the received travel information and based on at least one of travel information of another vehicle transmitted by another electronic device within the sub-area which the VRSU serves, road side sensing information from the first VRSI, or traffic light information of a target intersection; and transmit, to the electronic device, a pass scheduling message comprising the VRSU identifier of the VRSU and the pass scheduling information.

In some embodiments, the VRSU is configured to: receive a detection result from the electronic device within the sub-area which the VRSU serves, the detection result comprising driving environment information detected by the electronic device via a sensing device; generate driving assistance information based on the received detection result and based on at least one of a detection result transmitted by another electronic device within the sub-area which the VRSU serves or the detection result of the VRSU; and transmit, to the electronic device, a driving assistance message comprising the VRSU identifier of the VRSU and the driving assistance information.

In some embodiments, the VRSU is configured to: receive, from the electronic device within the sub-area which the VRSU serves, a message comprising the VRSU identifier of the VRSU.

According to another aspect of the present disclosure, there is provided a virtual infrastructure management unit (VIMU), comprising: a memory having thereon stored computer-executable instructions; and a processor coupled with the memory and configured to execute the computer-executable instructions to: allocate, for each sub-area of at least one sub-area within coverage of an air platform-based road side system (RSS), at least part of physical resources of a road side infrastructure of the RSS that are virtualized, to deploy one virtual road side infrastructure (VRSI) for the sub-area, each VRSI at least comprising a virtual road side unit (VRSU), each VRSU comprising at least part of hardware resources and software resources of a road side unit (RSU) that are virtualized.

According to another aspect of the present disclosure, there is provided a method performed by an electronic device, comprising: when located within a first sub-area of at least one sub-area within coverage of an air platform-based road side system (RSS), receiving a first virtual road side unit (VRSU) identifier from a first VRSU in a first virtual road side infrastructure (VRSI) that serves the first sub-area.

According to another aspect of the present disclosure, there is provided a method performed by an air platform-based road side system (RSS), comprising: virtualizing, by an air platform for a road side infrastructure (APRSI) comprising an air bearer platform and a road side infrastructure born on the air bearer platform, physical resources of the road side infrastructure; and allocating, by a virtual infrastructure management unit (VIMU), at least part of the virtualized physical resources for each sub-area of at least one sub-area within coverage of the RSS, to deploy one VRSI for each sub-area, each VRSI at least comprising one virtual road side unit (VRSU), each VRSU comprising at least part of hardware resources and software resources of a road side unit (RSU) that are virtualized.

According to another aspect of the present disclosure, there is provided a method performed by a virtual infrastructure management unit (VIMU), comprising: allocating, for each sub-area of at least one sub-area within coverage of an air platform-based road side system (RSS), at least part of physical resources of a road side infrastructure of the RSS that are virtualized, to deploy one virtual road side infrastructure (VRSI) for the sub-area, each VRSI at least comprising a virtual road side unit (VRSU), each VRSU comprising at least part of hardware resources and software resources of a road side unit (RSU) that are virtualized.

According to another aspect of the present disclosure, there is provided a computer storage medium having thereon stored computer-executable instructions which, when executed by a processor, perform the method as described above.

According to another aspect of the present disclosure, there is provided a computer program product, comprising computer-executable instructions which, when executed by a processor, perform the method as described above.

### BRIEF DESCRIPTION OF THE DRAWINGS

The present disclosure may be better understood by referring to the following detailed description presented in conjunction with the accompanying drawings, wherein identical or similar reference numerals are used in all the accompanying drawings to represent identical or similar elements. All the accompanying drawings, along with the detailed explanation below, which are incorporated in and form a part of this specification, are used for further illustrating embodiments of the present disclosure and explaining the principles and advantages of the present disclosure. In the drawings:
Fig. 1 is an exemplary overview diagram illustrating an air platform-based road side system according to an embodiment of the present disclosure.
Fig. 2A is a schematic deployment diagram illustrating an air platform-based road side system according to an embodiment of the present disclosure.
Figs. 2B and 2C illustrate a schematic diagram of providing a virtual infrastructure service based on a virtual RSU according to an embodiment of the present disclosure.
Fig. 3 illustrates a schematic system architecture diagram of an air platform-based road side system according to an embodiment of the present disclosure.
Fig. 4 illustrates an exemplary message mechanism for an air platform-based road side system according to an embodiment of the present disclosure.
Fig. 5 illustrates a virtual resource slice deployment architecture diagram according to an embodiment of the present disclosure.
Fig. 6 illustrates an exemplary flow diagram of a resource allocation method of a road side system according to an embodiment of the present disclosure.
Fig. 7 illustrates an intersection passing scenario assisted by a road side subsystem according to an embodiment of the present disclosure.
Fig. 8 illustrates an exemplary flow diagram of a method performed by an electronic device according to an embodiment of the present disclosure.
Fig. 9 illustrates a sensing data sharing scenario assisted by a road side subsystem according to an embodiment of the present disclosure.
Fig. 10 illustrates an exemplary flow diagram of a method performed by an electronic device according to an embodiment of the present disclosure.
Fig. 11 illustrates an exemplary flow diagram of a method performed by an air platform-based road side system (RSS) according to an embodiment of the present disclosure.
Fig. 12 illustrates an exemplary flow diagram of a method performed by a VIMU according to an embodiment of the present disclosure.
Fig. 13 is a block diagram illustrating a first example of a schematic configuration of an RSU to which the technique of this disclosure can be applied.
Fig. 14 is a block diagram illustrating a second example of a schematic configuration of an RSU to which the technique of this disclosure can be applied.
Fig. 15 is a block diagram illustrating an example of a schematic configuration of a smartphone to which the technique of this disclosure can be applied.
Fig. 16 is a block diagram illustrating an example of a schematic configuration of a car navigation device to which the technique of this disclosure can be applied.

Features and aspects of the present disclosure will be clearly understood by reading the following detailed description with reference to the accompanying drawings.

### DETAILED DESCRIPTION

Various exemplary embodiments of the present disclosure will be described in detail hereinafter with reference to the accompanying drawings. For clarity and conciseness, all implementations of the embodiments have not been described in this description. It should be noted, however, that when the embodiments of the present disclosure are implemented, many implementation-specific settings may be made according to specific requirements, so as to achieve specific goals of developers. In addition, it should be understood that although development work may be complex and laborious, such development disclosure is only a routine task for those skilled in the art benefiting from this disclosure.

Furthermore, it should be noted that in order to avoid obscuring the present disclosure due to unnecessary details, only processing steps and/or device structures germane to the technical solutions of the present disclosure are shown in the drawings. The following description of exemplary embodiments is merely illustrative and is not intended to be any limitation on this disclosure or its application.

This description includes references to "one embodiment" or "an embodiment". Appearances of phrases "in one embodiment" or "in an embodiment" do not necessarily refer to the same embodiment. A specific feature, structure, or characteristic may be combined in any suitable manner consistent with this disclosure.

A term "comprising" is open-minded. As used in the appended claims, the term does not exclude an additional structure or step. Considering a claim described as follows: "An apparatus, comprising one or more processor units... ", such a claim does not exclude that the apparatus comprises an additional component (e.g. a network interface unit, a graphics circuit, etc.).

Various units, circuits, or other components may be described or stated as being "configured to" perform one or more tasks. In such this context, "configured to" is used for, by indicating that a unit/circuit/component includes a structure (e.g., a circuit) performing the one or more tasks during operations, implying the structure. In this way, the unit/circuit/component may be configured to perform this task even when the specified unit/circuit/component is not currently operable (e.g., not connected). The unit/circuit/component used with the "configured to" language includes hardware, for example, a circuit, a memory for storing program instructions executable to implement the operations, etc. Furthermore, "configured to" may include a general-purpose structure (e.g., a general-purpose circuit) manipulated by software and/or firmware (e.g., an FPGA or a general-purpose processor executing software) to operate in a manner that one or more tasks to be solved can be performed. "configured to" may also include adjusting a manufacturing process (e.g., a semiconductor manufacturing facility) to manufacture a device (e.g., an integrated circuit) suitable for implementing or performing one or more tasks.

Terms "first", "second", and the like, herein, function as labels of nouns they precede, and do not imply any type of ranking (e.g., spatial, temporal, logical, etc.).

A term "based on" is used for describing one or more factors that affect determination. The term does not exclude an additional factor that may affect the determination. That is, the determination may be merely based on these factors or at least partially based on these factors. Consider a phrase "determining A based on B". In this case, the B is a factor that affects the determination of the A, and the phrase does not exclude that the A may also be determined based on C. In other cases, the A may be determined based on the B alone.

The embodiments of the present disclosure contemplate that an air platform-based road side system is arranged such that a road side infrastructure (for example, a road side unit, a road side computing control unit, a road side traffic control device, a road side sensing device and the like) is born on an air bearer device such as a tethered aerostat, providing an air road side system which has low cost, easy deployment, wide coverage and is less susceptible to changes in a ground environment.

The embodiments of the present disclosure also contemplate that physical resources (including hardware resources, software resources, etc.) of the road side infrastructure of the air platform-based road side system are virtualized, and the virtualized physical resources are allocated as needed. For example, physical resources (including hardware resources, software resources, etc.) of the RSU may be virtualized and divided into one or more virtual RSUs, and physical resources (including hardware resources, software resources, etc.) of the RSCCU may be virtualized and divided into one or more virtual RSCCUs. This may provide more flexible and efficient resource configuration, improving resource utilization rate.

More specifically, the embodiments of the present disclosure contemplate that sub-areas within coverage of the air platform-based road side system where a virtual road side infrastructure needs to be deployed are determined to deploy a virtual road side infrastructure for each determined sub-area. By allocating at least part of the virtualized resources for each determined sub-area according to an application scenario, history data, etc. for each sub-area, a virtual road side infrastructure is deployed for the sub-area. That is, a virtual road side infrastructure deployed for a sub-area includes at least part of virtualized resources allocated for the sub-area. Each virtual road side infrastructure may include one virtual RSU. Each virtual road side infrastructure may also include one virtual RSCCU and an associated road side traffic control device and road side sensing device. This means that resources of one same RSU or RSCCU may be used for a plurality of virtual road side infrastructures corresponding to a plurality of sub-areas, thereby providing flexible resource configuration and efficient resource utilization.

The embodiments of the present disclosure also provide a concept of a virtual road side infrastructure resource slice, i.e., the virtualized resources being provided in different types of virtual road side infrastructure resource slices. For example, for a resource requirement feature (e.g., a latency requirement, bandwidth requirement, computing capability requirement, storage capability requirement, etc.) of the sub-area, an appropriate virtual road side infrastructure resource slice type may be selected for the sub-area. This may provide finer resource configuration, improving overall resource utilization rate.

The embodiments of the present disclosure also provide that map information is provided for the road side system at least according to a location of the road side system, to determine a sub-area where the virtual road side infrastructure needs to be deployed based on the map information. The map information includes, for example, road intersection information, so that the sub-area where the virtual road side infrastructure needs to be deployed may be determined based on an intersection where the virtual road side infrastructure needs to be deployed. This may provide finer resource configuration, improving overall resource utilization rate. This is especially important in the case of resource constraint.

The embodiments of the present disclosure further provide a virtual infrastructure management unit, for performing determination of the above sub-area, management and allocation of the virtualized resources, and the like. The embodiments of the present disclosure further provide that a communication interface and a corresponding message set are newly added between the virtual infrastructure management unit and an Internet of Vehicles cloud control platform, to expand, between the virtual road side unit and the Internet of Vehicles cloud control platform, an existing communication interface and message set between the corresponding road side unit and the Internet of Vehicles cloud control platform.

The embodiments of the present disclosure also contemplate that an identifier of the virtual road side unit is transmitted by the virtual road side unit to a vehicle-mounted unit. Communication between the virtual road side unit and the vehicle-mounted unit is performed by using the identifier of the virtual road side unit, to implement, for example, intersection passing assisted by the road side system, sensing data sharing assisted by the road side system, vehicle payment service assisted by the road side system, and the like.

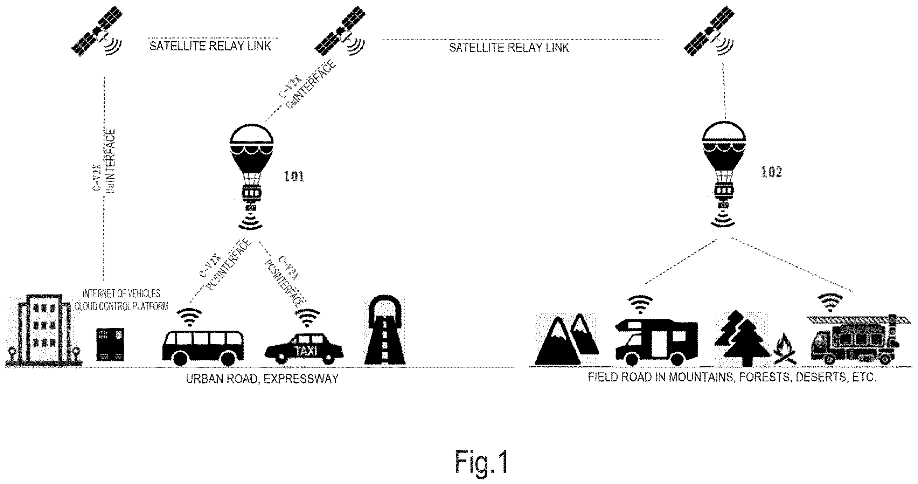

Fig. 1 is an exemplary overview diagram illustrating an air platform-based road side system according to an embodiment of the present disclosure.

As shown in Fig. 1, two air platform-based road side systems 101 and 102 are shown, wherein the road side system 101 is arranged over an urban road or expressway, and the road side system 102 is arranged over a field road in mountains, forests, deserts, etc.

In Fig. 1, each road side system uses a tethered aerostat as an air bearer device to form its air bearer platform.

The tethered aerostat can include a sphere, a power supply subsystem, a pressure regulation subsystem, a measurement and control subsystem, a communication subsystem, a lightning protection subsystem, a ground tethering subsystem and the like.

Those skilled in the art can appreciate that various facilities capable of achieving air suspension may be used as the air bearer device, including but not limited to: an airship, medium to high-altitude aerostat, low-altitude/ultra low-altitude tethered aerostat, unmanned aerial vehicle, etc.

The air bearer device may bear a road side infrastructure of the road side system. The road side infrastructure may include a road side unit, road side computing control unit, road side sensing device, traffic control device, and the like. The road side sensing device may include, but is not limited to, a camera (e.g., a laser camera), sensor, and radar (e.g., laser radar, millimeter-wave radar). The traffic control device may include, but is not limited to, a traffic light and traffic warning sign.

As shown in Fig. 1, each road side system may, via a satellite relay link, communicate with an Internet of Vehicles remote cloud control platform on the ground. The road side system may communicate with the Internet of Vehicles remote cloud control platform on the ground using a C-V2X interface, and may communicate with a vehicle (e.g. , vehicle-mounted unit) on the ground using the C-V2X interface.

By taking an example that the tethered aerostat is used as the air bearer device, different tethered aerostats can be used for different scenario requirements.

Table 1 shows exemplary tethered aerostat classification.

**Table 1: tethered aerostat classification table**

| Tethered aerostat type | Aerostat volume (m³) | Altitude (m) | Coverage radius (m) | Load capacity( kg) | Mounting type |
|---|---|---|---|---|---|
| Mini | 5-20 | <200 | <500 | 5 | RSU, camera, laser radar, traffic light |
| Small-size d | 20-200 | 200-500 | <2000 | 50 | Enhanced RSU, laser pan/tilt/zoom camera |
| Medium and large-size d | >200 | >500 | >=2000 | >50 | Enhanced RSU, ultra long-range laser pan/tilt/zoom camera |

Different types of tethered aerostats can have thereon mounted devices with different coverage. Table 2 shows an exemplary mounted device coverage classification table.

**Table 2: mounted device coverage classification table**

| Mounted device | Communication/monitoring distance |
|---|---|
| Standard RSU | PC5 direct communication distance <500m |
| Enhanced RSU | PC5 direct communication distance > 2km |
| Laser radar | Monitoring distance <200m |
| Standard camera | Monitoring distance <200m |
| Laser pan/tilt/zoom camera | Monitoring distance >500m |
| Ultra long-range laser pan/tilt/zoom camera | Monitoring distance >2km |

According to Tables 1 and 2, for the requirements of different application scenarios, it is possible to select different types of tethered aerostats and mount different devices.

For example, for a single intersection within a coverage radius less than 500 meters, it is possible to use a very low-altitude (altitude<50 meters) mini tethered aerostat to mount a standard RSU, a road side traffic control device such as an air signal light, a road side sensing device such as a laser radar, and the like, thereby providing refined road side infrastructure services for the vehicle.

For an urban block within a coverage radius less than 2 kilometers, it is possible to use a low-altitude (altitude<500 meters) small-sized tethered aerostat to mount an enhanced air RSU, and a road side sensing device such as a pan/tilt/zoom laser camera, supporting coverage of 3-4 intersections simultaneously to reduce the deployment and use cost.

For suburbs, mountains, deserts and other temporary emergency service scenarios within a coverage radius more than 2 kilometers, it is possible to use a medium and low-altitude (altitude< 3000 meters), large-sized tethered aerostat, to mount an enhanced RSU, and a road side device such as an ultra long-range pan/tilt/zoom laser camera, supporting coverage of dozens of intersections, further reducing the deployment and use cost.

In some embodiments, a mounting solution with a combination of the above different altitudes may be employed, for example, using a small-sized tethered aerostat at a low altitude to mount an enhanced RSU and a road side sensing device such as a pan/tilt/zoom laser camera, while using mini tethered aerostats at part of intersections to mount air signal lights, air laser radars, etc., to provide enhanced road side infrastructure services.

In other words, one air platform of a road side system may include one or more air bearer devices. These air bearer devices may be different types of air bearer devices. These air bearer devices may be dispersed in different locations and mounted with different devices, respectively. These air bearer devices may support radio communication between each other. The air bearer device may provide an interface for coupling and communicating with a device mounted thereon.

The road side infrastructure is arranged in the air such that the road side system may have wider coverage and be less susceptible to a ground communication environment. Furthermore, compared to an approach of arranging a ground road side system by setting up an overhead shelf or the like on the ground, the air platform-based road side system has less cost, easier deployment, and more flexibility.

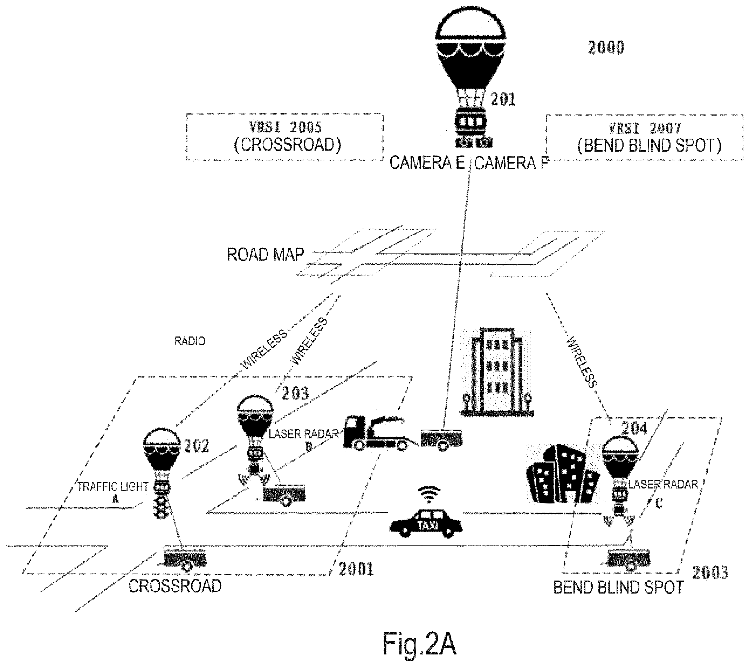

Fig. 2A is a schematic deployment diagram illustrating an air platform-based road side system 2000 according to an embodiment of the present disclosure.

The road side system 2000 is disposed at a certain geographic location and provides certain coverage. Under this coverage, there may be a plurality of sub-areas that need centralized provision of road side infrastructure services, such as a sub-area 2001 where a crossroad is located and a sub-area 2003 where a bend blind spot is located as shown in Fig. 2A.

For each sub-area, one virtual road side infrastructure (VRSI) may be deployed. As shown in Fig. 2A, a VRSI 2005 is deployed for the sub-area 2001, and a VRSI 2007 is deployed for the sub-area 2003. A VRSI may include physical resources of the road side system 2000 that are allocated for a corresponding sub-area, including hardware resources and software resources, etc.

According to the embodiment of the present disclosure, the physical resources of the road side system 2000 may be virtualized, and at least part of the virtualized physical resources may be allocated to each sub-areas where a VRSI needs to be deployed, thereby deploying a corresponding VRSI for each sub-area. For example, physical resources (including hardware resources and software resources) of an RSU may be divided into a plurality of virtual RSUs, and the plurality of virtual RSUs may be allocated to different sub-areas.

Each virtual road side infrastructure may comprise at least one virtual RSU. Each virtual RSU may comprise at least part of physical resources (including hardware resources and software resources) of a corresponding road side unit (RSU) that are virtualized. A resource configuration associated with one virtual RSU includes, for example, a virtual CPU configuration, a virtual memory configuration, a virtual disk configuration, a virtual network configuration, and the like.

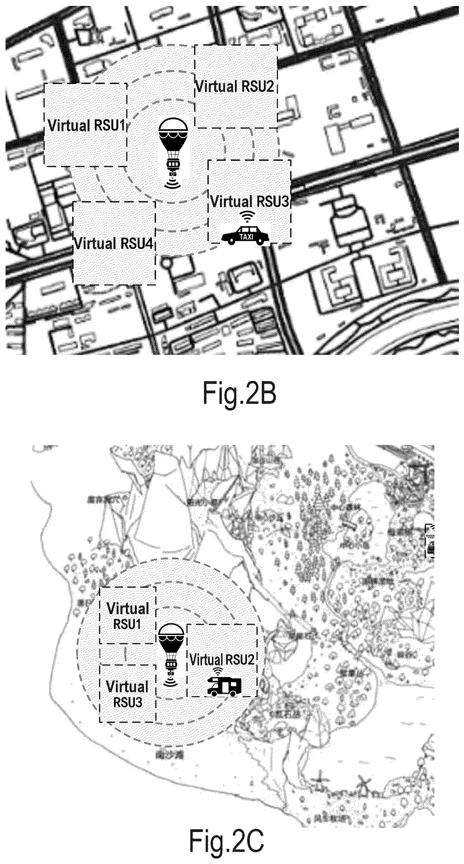

Figs. 2B and 2C illustrate schematic diagrams of providing a virtual infrastructure service based on a virtual RSU according to an embodiment of the present disclosure. Fig. 2B illustrates one air platform-based road side system deployed over a city, including four virtual RSUs to provide road side infrastructure services for different areas of its coverage. Fig. 2C illustrates one air platform-based road side system deployed over a forest, including three virtual RSUs to provide road side infrastructure services for different areas of its coverage.

Similarly, physical resources (including hardware resources and software resources) of an RSCCU may be virtualized and divided into a plurality of virtual RSCCUs, and the plurality of virtual RSCCUs may be allocated to different sub-areas.

Each virtual road side infrastructure may also comprise one virtual RSCCU and an associated road side sensing device and/or road side traffic control device. Each VRSCCU may include at least part of physical resources of a corresponding road side computing control unit that are virtualized. The virtual RSCCU is used for providing access of the associated road side sensing device and/or road side traffic control device.

Each virtual road side infrastructure may also include a corresponding air bearer device.

In Fig. 2A, the road side system 2000 includes 4 air bearer devices 201-204, wherein the air bearer device 201 is, for example, a low-altitude small-sized tethered aerostat, and the air bearer devices 202-204 are, for example, a ultra low-altitude mini tethered aerostat.

The air bearer device 201 may have thereon mounted an RSU (not shown), an RSCCU (not shown) and two pan/tilt/zoom laser cameras E and F. The air bearer device 202 may have thereon mounted a traffic light A. The air bearer device 203 may have thereon mounted a laser radar B. The air bearer device 204 may have thereon mounted a laser radar C.

The RSU may be virtualized and provides two different virtual RSUs (with different virtual RSU identifiers) for a VRSI 2005 and VRSI 2007, respectively. The RSCCU may be virtualized and provide two different virtual RSCCUs (with different virtual RSCCU identifiers) for the VRSI 2005 and VRSI 2007, respectively.

Accordingly, the VRSI 2005 may include one virtual RSU, one RSCCU, the air bearer devices 202 and 203, the traffic light A, the laser radar B, and the pan/tilt/zoom laser camera E. The VRSI 2007 may include one virtual RSU, one RSCCU, the air bearer device 204, the laser radar C, and the pan/tilt/zoom laser camera F.

In some embodiments, the determination of a sub-area where a VRSI needs to be deployed may be based on map information (as shown by a "road map" in Fig. 2A) related to a deployment location of the road side system.

In some embodiments, a sub-area where a VRSI needs to be deployed may be manually specified according to map information related to a deployment location of the road side system. In other words, the VRSI may be manually allocated for the determined sub-area, which may include, for example, allocating a VRSI identifier, or the like.

In other embodiments, a sub-area where a VRSI needs to be deployed may be automatically determined by the road side system 2000 according to map information related to a deployment location of the road side system. The road side system may allocate a VRSI identifier and corresponding resources for the determined sub-area.

The map information may be from an Internet of Vehicles cloud control platform, or from a map pre-stored in the road side system 2000.

The deployment location of the road side system may be from user input. The deployment location of the road side system may be determined by a positioning device included in the road side system itself.

By determining the sub-area where a VRSI needs to be deployed based on the map information associated with the deployment location of the road side system and performing virtualization allocation on the physical resources of the road side system as needed, flexible road side infrastructure services which accurately adapt to requirements can be provided, and the resource utilization rate can be improved.

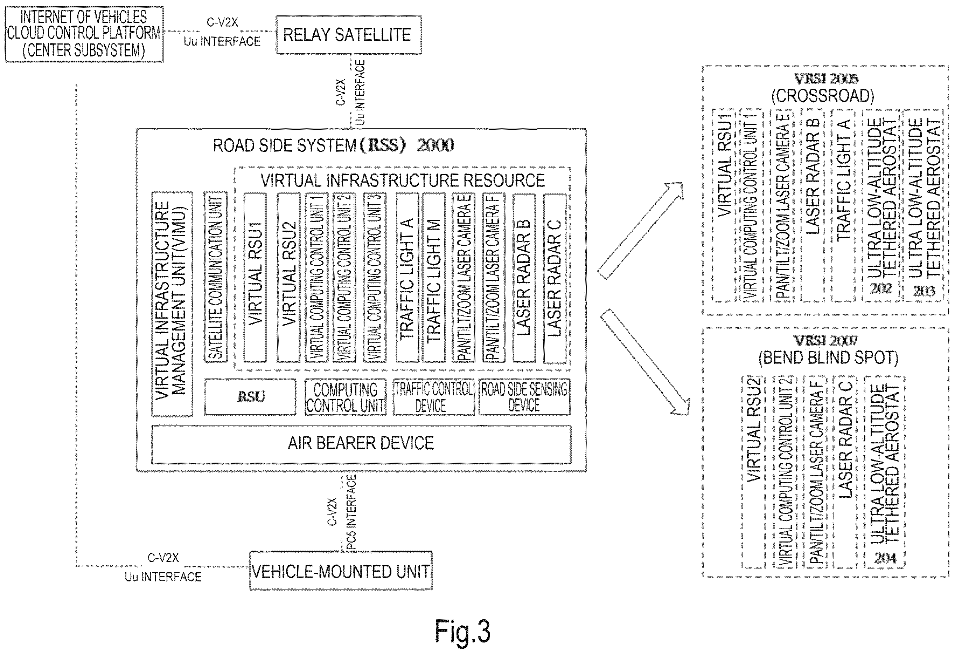

Fig. 3 illustrates a schematic system architecture diagram of an air platform-based road side system 2000 according to an embodiment of the present disclosure.

As shown in Fig. 3, the road side system may include various road side infrastructures, including an air bearer device, and a road side unit (RSU), computing control unit, traffic control device and road side sensing device, which are born on the air bearer device.

As shown in Fig. 3, virtual infrastructure resources are formed by virtualizing physical resources (including hardware resources and software resources, and the like) of the road side system 2000. As shown in the figure, the virtual infrastructure resources may include two virtual RSUs (i.e., virtual RSUs 1 and 2), three virtual computing control units (i.e., virtual computing control units 1-3), two traffic lights (i.e., traffic lights A and M), two pan/tilt/zoom laser cameras (i.e., pan/tilt/zoom laser cameras E and F), and two laser radars (i.e., laser radars B and C). The virtual infrastructure resources may also include physical resources of an air bearer device(e.g., a tethered aerostat) not shown.

In the present application, the physical resources include both hardware devices and software configurations, and also include physical capabilities (such as a bandwidth, computing capability, frequency band, etc.) supported by the hardware devices and the software configurations.

As shown in Fig. 3, the road side system 2000 may also comprise a virtual infrastructure management unit (VIMU). The VIMU is configured to provide functions such as management and allocation of the virtual resources, fault handling, and is responsible for lifecycle management (such as instantiation, configuration, shutdown, etc.) for the virtual infrastructure (VRSI), virtual road side unit (VRSU), virtual computing control unit (VRSCCU).

The VIMU is configured to allocate, for each sub-area within coverage of the road side system where a VRSI is to be deployed, at least part of the physical resources of the road side infrastructure of the RSS that are virtualized, thereby deploying the corresponding virtual road side infrastructure (VRSI) for the sub-area.

As shown in Fig. 3, the VIMU may deploy the virtual road side infrastructures 2005 and 2007 for the sub-areas 2001 and 2003 shown in Fig. 2A, respectively.

The virtual road side infrastructure 2005 includes one virtual RSU (i.e., the virtual RSU 1), 1 virtual computing control unit (i.e., the virtual computing control unit 1), 1 pan/tilt/zoom laser camera (the pan/tilt/zoom laser camera E shown in Fig. 2A), 1 laser radar (the laser radar B shown in Fig. 2A), 1 traffic light (the traffic light A shown in Fig. 2A), and two ultra low-altitude tethered aerostats (the air bearer devices 202 and 203 shown in Fig. 2A).

The virtual road side infrastructure 2007 may include 1 virtual RSU (i.e., the virtual RSU 2), 1 virtual computing control unit (i.e., the virtual computing control unit 2), 1 pan/tilt/zoom laser camera (the pan/tilt/zoom laser camera F shown in Fig. 2A), 1 laser radar (the laser radar C shown in Fig. 2A), and 1 ultra low-altitude tethered aerostat (the air bearer device 204 shown in Fig. 2A).

The virtual computing control units 3 and the traffic light M in the virtual infrastructure resources of Fig. 3 may be allocated to other VRSIs.

The virtual infrastructure management unit may receive the map information and identify a sub-area where a service needs to be provided, such as the sub-area 2001 including the crossroad or the sub-area 2003 including the bend blind spot as shown in Fig. 2A. In some embodiments, the virtual infrastructure management unit may also directly receive specified information for the sub-area, such as location information of the sub-area and a geographic feature of the sub-area.

The virtual infrastructure management unit may receive information related to a resource requirement feature associated with the sub-area, such as latency, bandwidth, computing, storage, positioning accuracy, reliability requirements, etc. determined by an application scenario, etc. The virtual infrastructure management unit may, based on a resource requirement feature of each sub-area, select an appropriate virtual resource slice type for the sub-area and allocate appropriate resources.

In some embodiments, the virtual infrastructure management unit may be implemented as a software program. In other embodiments, the virtual infrastructure management unit may be implemented as a separate hardware device, which may be wired/wirelessly coupled and communicate with the various road side infrastructures . In still other embodiments, the virtual infrastructure management unit may also be integrated into the air bearer device, RSU, RSCCU or other devices.

As shown in Fig. 3, the road side system may communicate with a relay satellite via a C-V2X Uu interface, and the relay satellite communicates with an Internet of vehicles cloud platform via a C-V2X Uu interface. The road side system may communicate with a vehicle-mounted unit via a C-V2X PC5 interface. The vehicle-mounted unit can communicate with the Internet of Vehicles cloud control platform through a C-V2X Uu interface.

As shown in Fig. 3, the road side system 2000 may also include a satellite communication unit for communication with the relay satellite. In some embodiments, the satellite communication unit may be integrated into the air bearer device.

By performing virtualization allocation on the physical resources of the road side system 2000, different VRSIs may be deployed according to different resource requirements of different sub-areas, which can provide more accurate road side infrastructure services, and improve the flexibility of the deployment of the road side infrastructure and the resource utilization rate of the entire road side system.

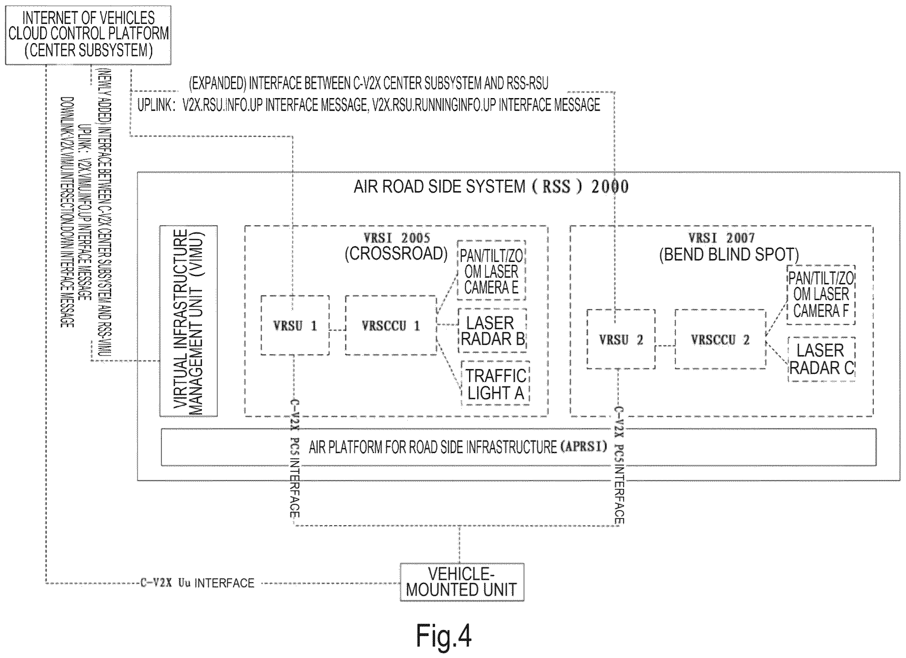

Fig. 4 illustrates an exemplary message mechanism for an air platform-based road side system 2000 according to an embodiment of the present disclosure.

As shown in Fig. 4, the road side system 2000 includes a virtual infrastructure management unit (VIMU), which is configured to provide management and allocation of virtual resources, fault handling, and other functions, and is responsible for lifecycle management (instantiation, configuration, shutdown, etc.) for a VRSU, VRSCCU, and VRSI.

The road side system 2000 also includes virtual road side infrastructures VRSIs 2005 and 2007. The VRSI 2005 includes one group of a virtual RSU (i.e., a VRSU 1), a virtual RSCCU (i.e., a VRSCCU 1), a traffic control device (i.e., a traffic light A), and a road side sensing device (i.e., a pan/tilt/zoom laser camera E and a laser radar B). The VRSI 2007 includes one group of a virtual RSU (i.e., a VRSU 2), a virtual RSCCU (i.e., a VRSCCU 2), and a road side sensing device (i.e., a laser radar C).

The road side system 2000 also includes an air platform for road side infrastructure (APRSI), which is configured to provide a running environment for the VRSU and VRSCCU that includes required hardware and software, and configured to virtualize physical resources of a road side infrastructure of the road side system 2000 into virtual resources for use by the VRSU and VRSCCU.

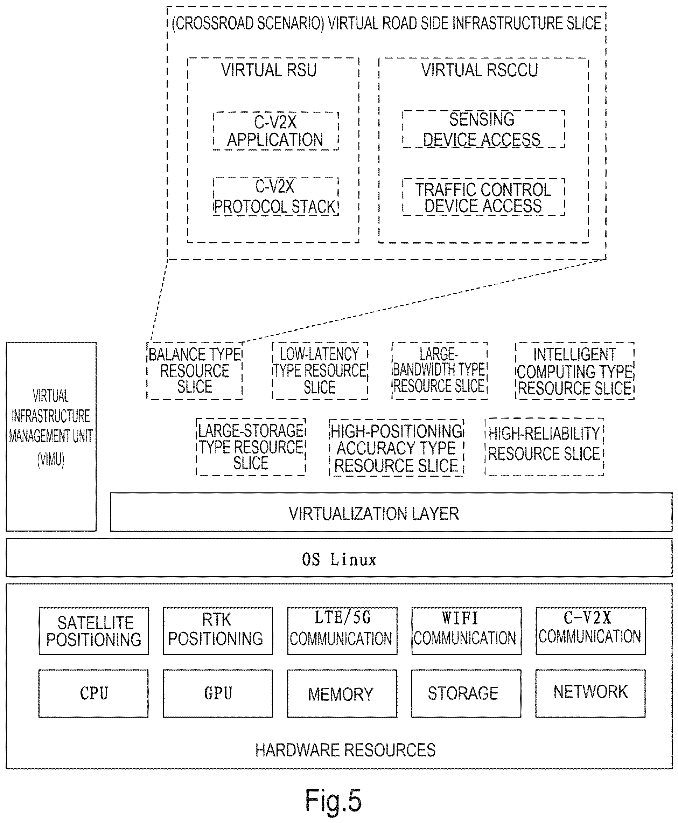

The air platform may provide a bearing function, for example, including a tethered aerostat to provide device suspension. The air platform may provide a communication function and/or an interface function, for example, including various communication components (e.g., satellite communication, Wifi communication) including power interfaces, communication interfaces, etc., to be coupled with the road side infrastructure. The air platform may also provide a virtualization function to virtualize physical resources (including hardware resources and software resources, etc.) of the road side infrastructure born by the platform, which are shown as three parts in Fig. 5 below, i.e., hardware resources, OS Linux, and a virtualization layer.

Fig. 5 illustrates a virtual resource slice deployment architecture diagram according to an embodiment of the present disclosure.

Fig. 5 illustrates that the road side system 2000 may include hardware resources, such as a CPU, GPU, memory, storage device, and network device, as well as devices for supporting satellite positioning, real time kinematic (RTK) positioning, LET/5G communication, WiFi communication, C-2VX communication, and the like. The road side system also includes an OS operating system and a virtualization layer. The virtualization layer virtualizes the physical resources of the road side system.

As shown in Fig. 5, the virtualized resources may be deployed in various types of resource slices. Table 3 shows an exemplary resource slice classification table according to an embodiment of the present disclosure.

As shown in Table 3, the balance type slice represents balance of latency/bandwidth/computing/storage capabilities, with a bandwidth between 10 and 100Mbps, a processing latency between 20 and 100ms, supporting an image processing level computing capability, TB level storage or supporting a memory database, meter level positioning accuracy, and reliability of 99%; the low-latency type slice supports a latency reduced to below 20ms; the large-bandwidth type slice supports a bandwidth over 100Mbps; the intelligent computing type slice supports intelligent decision, video coding and decoding, and big data analysis type computing capabilities; the large-storage type slice supports EB level or supports a massive non-structured database; the high-positioning accuracy type slice supports sub-meter level positioning accuracy; and the high-reliability slice supports reliability reaching 99.99%.

**Table 3: resource slice classification table**

| Slice type | Description |
|---|---|
| Balance type slice | Balance of latency/bandwidth/computing/storage capabilities |
| | • bandwidth: 10~100Mbps |
| | • latency: 20~100ms |
| | • computing: supporting an image processing level computing capability |
| | • storage: TB level storage or supporting a memory database |
| | • positioning accuracy: meter level |
| | • reliability: 990 |
| Low-latency type slice | Latency below 20ms |
| Large-bandwidth slice | Bandwidth over 100Mbps |
| Intelligent computing type slice | Supporting intelligent decision, video coding and decoding, and big data analysis type computing capabilities |
| Large storage type slice | EB level or supporting a massive non-structured database |
| High-positioning accuracy type slice | Sub-meter level |
| High-reliability type slice | Reliability of 99.99% |
| Others | Expandable |

The VIMU can, according to resource requirement features of different scenarios, select a suitable resource slice type for the VRSI, and deploy the virtual RSU, the virtual RSCCU, the corresponding sensing device and traffic control device.

As shown in Fig. 5, for example, for a crossroad scenario (e.g., as shown in the sub-area 2001 in Fig. 2A), a balance type resource slice may be selected. The slice may be used for deploying, for example: 1 virtual RSU, which includes a C-V2X crossroad vehicle guidance algorithm application and a C-V2X-related protocol stack; and 1 virtual RSCCU, which is used for sensing device access and traffic control device access, such as access of the pan/tilt/zoom laser camera device E, laser radar device B, traffic light A shown in Fig. 2. The slice can support vehicles to pass through a crossroad in an orderly manner.

By providing the virtualized physical resources in different types of resource slices, appropriate types of resource slices may be selected for resource requirement features (e.g., different latency, bandwidth, computing, storage, positioning accuracy, and reliability requirements, etc.) of different sub-areas. This can provide a flexible resource deployment approach, improving the utilization of the overall resources.

Returning to Fig. 4, the virtual infrastructure management unit may perform communication via a newly added interface between the RSS-VIUM and a center subsystem of the Internet of Vehicles cloud control platform, such as uplink transmission of a V2X.VIMU.INFO.UP interface message from the VIUM to the center subsystem and downlink transmission of a V2X.VIMU.INTERSECTION.DOWN interface message from the center subsystem to the VIMU. The V2X.VIMU.INFO.UP interface message and the V2X.VIMU.INTERSECTION.DOWN interface message both are newly added messages.

As shown in Fig. 4, each virtual road side unit may perform communication via an interface between the center subsystem and the RSS-RSU (the RSU corresponding to the virtual road side unit), such as uplink transmission of a V2X.RSU.INFO.UP interface message from the VRSU to the center subsystem, and downlink transmission of a V2X.RSU.RunningInfo.UP interface message from the center subsystem to the VRSU. This is an expansion for the existing interface between the center subsystem and the RSS-RSU as well as the message transmitted on this interface.

As shown in Fig. 4, the VRSU may communicate with the vehicle-mounted unit via an existing C-V2X PC5 interface. The vehicle-mounted unit may communicate with the center subsystem via a C-V2X Uu interface.

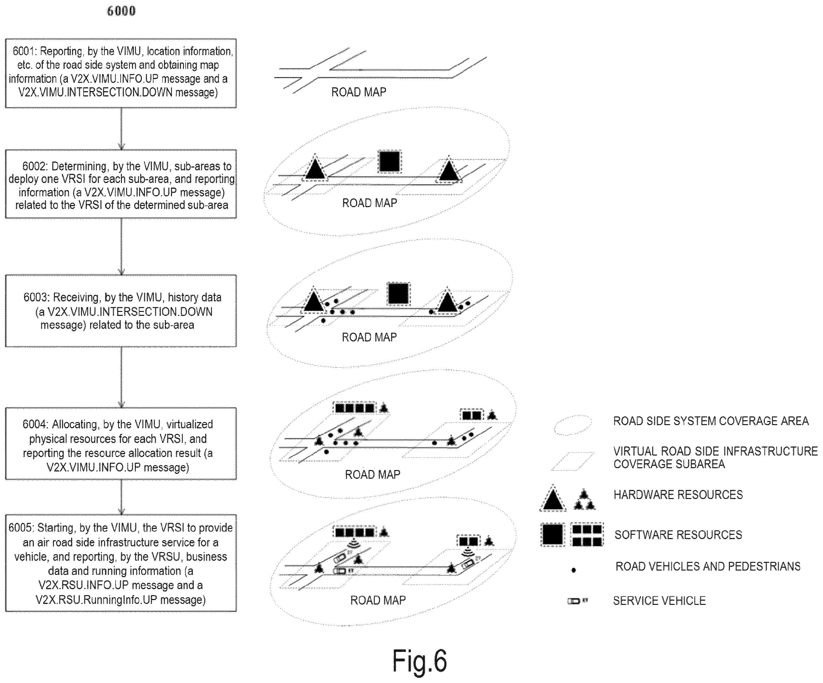

Fig. 6 illustrates an exemplary flow diagram of a resource allocation method 6000 of a road side system according to an embodiment of the present disclosure.

As shown in Fig. 6, the method 6000 comprises step 6001, where the road side system reports, to an Internet of Vehicles cloud control platform center subsystem, location information (for example, longitude and latitude of a location where the road side system is deployed) of the road side system.

Specifically, a road side system information table may be reported by a VIMU via a V2X.VIMU.INFO.UP message on a newly added interface between the RSS-VIMU and the Internet of Vehicles cloud control platform center subsystem.

Table 4 shows an exemplary road side system basic information table according to an embodiment of the present disclosure. As shown in Table 4, the basic information table may include a timestamp, a system identifier (i.e., an RSS identifier), an RSS location (e.g., longitude and latitude ), a running status (indicating whether the road side system is in a status of resource virtualization), and a running mode (normal mode, disaster preparedness mode, or temporary emergency mode).

**Table 4: road side system basic information table**

| Data classification | Name | Data name | Description |
|---|---|---|---|
| Timestamp | timeStamp | Time | |
| RSS basic information | rssId | RSS identifier | Identifier of road side system |
| | location | Location | Location information, including longitude and latitude data |
| | rssStatus | Running status | RSS system running status, 1: physical status, 2: virtual status |
| | rssMode | Running mode | 1:normal, 2: disaster preparedness, 3: temporary emergency |

After receiving the RSS basic information table, the center subsystem can, according to different running modes, select map information of roads within proper coverage to transmit. For different running modes, the transmitted map information can cover different radiuses and different numbers of intersections. Table 5 below shows an exemplary correspondence between the running mode and the map coverage radius as well as the number of intersections.

**Table 5: correspondence between running mode and map information**

| Running mode | Map coverage radius (meter) | Number of covered intersections |
|---|---|---|
| 1: Normal | 500 | 1 |
| 2:Disaster preparedness | 2000 | Less than or equal to 4 |
| 3: Temporary emergency | 3000 | More than 4 |

Step 6001 also comprises obtaining map information.

Specifically, the VIMU may receive an area road information table including the map information via a V2X.VIMU. INTERSECTION. DOWN message on the newly added interface between the RSS-VIMU and the Internet of Vehicles cloud control platform center subsystem.

The map information may be based on the location information (e.g., longitude and latitude) reported by the RSS. For example, the map information is information of all map slices within a certain coverage area centered on the location of the RSS.

The map information may also be based on the running mode reported by the RSS. For example, for different running modes, the map information is information of all map slices within different coverage areas centered on the location of the RSS.

Table 6 shows an exemplary area road information table according to an embodiment of the present disclosure. As shown in Table 6, the area road information table may include an intersection information list DF_IntersectionList.

The area road information table may include a timestamp, an RSS identifier, the number of intersections, and an intersection information list.

In the intersection information list DF_IntersectionList, an intersection identifier, location information (e.g., longitude and latitude), and intersection type (a crossroad, a fork in the road, a sharp turning junction, etc.) of each intersection, and an identifier of a map slice to which the intersection belongs, may be listed.

**Table 6: area road information table**

| Data classification | Name | Data name | Description |
|---|---|---|---|
| Timestamp | timeStamp | Time | |
| | rssId | RSS identifier | Identifier of road side system |
| Area road map information | IntersectionNum | Intersection number | |
| | IntersectionList | Intersection information list | |

### DF_IntersectionList

| | | | |
|---|---|---|---|
| Data classification | Name | Data name | Description |
| Intersection information | intersectionId | Intersection identifier | |
| | IntersectionPos | Intersection longitude and latitude coordinates | |
| | intersectionType | Intersection type | Crossroad, fork in the road, sharp turning junction, etc. |
| | mapSlice | Map slice identifier | Identifier of map slice to which intersection belongs |

Those skilled in the art can appreciate that the above are merely some examples of the RSS system basic information and map information, and that those skilled in the art may envision more, less or different information as needed.

As shown in Fig. 6, the method 6000 may further comprise step 6002, where the VIMU determines sub-areas where a virtual road side infrastructure (VRSI) is to be deployed, to deploy one VRSI for each determined sub-area, and reports information related to the VRSI of the determined sub-area.

The VIMU may determine sub-areas where a virtual road side infrastructure needs to be deployed according to the map information associated with the location of the RSS. For example, all intersections in the received map information are set as individual sub-areas where a corresponding VRSI is to be deployed.

The VIMU may also determine sub-areas where a virtual road side infrastructure needs to be deployed according to an application scenario.

For example, for an application scenario of collaborative intersection passing, a VRSI may be unnecessarily deployed for some intersections indicated in the map information.

For example, for an application scenario of autonomous parking based on road side sensing, only parking lots and the like where parking is available are determined as sub-areas, without considering intersections such as crossroads.

The application scenario is not limited to the crossroad and bend blind spot exemplified in the present disclosure. The application scenario may also include, for example, but is not limited to: autonomous parking based on road side sensing, collaborative ramp merging, collaborative intersection passing, kinematic data service, dynamic lane management, station path guiding service, floating car data acquisition, slow traffic warning, vehicle formation management, road toll service and the like. The VIMU may determine the number of VRSIs to be deployed based on the number of the determined sub-areas.

The VIMU may also, for each VRSI, allocate a VRSI identifier and a VRSU identifier and specify a location of a VRSU. The location of the VRSU may be longitude and latitude coordinates of an intersection corresponding to the VRSU.

The VIMU may, for a resource requirement feature of each sub-area, select an appropriate virtual road side infrastructure resource slice type for the VRSI of the sub-area. The resource requirement feature includes, for example, but is not limited to, a latency requirement, bandwidth requirement, computing capability requirement, storage capability requirement, and the like. The virtual road side infrastructure resource slice type is selected , for example, from Table 3.

The resource requirement feature can be associated with an application scenario. Different C-V2X application scenarios make different requirements for the road side infrastructure in latency, bandwidth, computing, storage, positioning accuracy, reliability, and other aspects. For example, an autonomous driving and sensor sharing scenario has a requirement for a latency being as low as 3ms; a sensor sharing scenario has a requirement for a bandwidth being up to 1Gbps; a global road condition analysis scenario makes a higher requirement for a computing capability that accurate analysis and processing can be rapidly performed on sensing contents such as a video and radar signal.

For example, for the VRSI 2005 of the crossroad scenario shown in Fig. 2A, the balance type resource slice as shown in Table 3 may be selected.

The VIUM may report a road side system basic information table including information related to the VRSI of the determined sub-area via a V2X.VIMU.INFO.UP message on the newly added interface between the VIUM and the Internet of Vehicles cloud control platform center subsystem.

Table 7 shows an exemplary road side system basic information table according to an embodiment of the present disclosure. As shown in Table 7, the basic information table includes a timestamp, an RSS identifier, an RSS location, the number of VRSIs to be deployed, and a VRSI information list DF_VrsiList.

In the DF_VrsiList, for each VRSI, a VRSI identifier, a VRSI slice type, an associated intersection identifier, an allocated VRSU identifier, and a deployment location of the VRSU are listed.

**Table 7: road side system basic information table**

| Data classification | Name | Data name | Description |
|---|---|---|---|
| Timestamp | timeStamp | Time | |
| RSS basic information | rssId | RSS identifier | Identifier of road side system |
| | rssLocation | RSS location | RSS location information (longitude and latitude) |
| VRSI basic information | vrsiNum | VRSI number | Number of virtual road side infrastructures |
| | vrsiList | VRSI information list | |

### DF_VrsiList

| Data classification | Name | Data name | Description |
|---|---|---|---|
| VRSI information | vrsiSliceId | VRSI identifier | Identifier of virtual road side infrastructure |
| | vrsiSliceType | VRSI slice type | Virtual road side infrastructure resource slice type |
| | intersectionId | Intersection identifier | |
| | vrsuId | VRSU identifier | Identifier of the VRSU |
| | vrsuLocation | VRSU location | Location information (longitude and latitude) of VRSU |

The method 6000 may also comprise step 6003, where the VIMU receives history data related to the sub-area.

Specifically, the VIMU may receive, from the Internet of Vehicles cloud control platform center subsystem, an area road information table including the history data associated with the determined sub-area via a V2X.VIMU.INTERSECTION.DOWN message on the newly added interface between the VIMU and the Internet of Vehicles cloud control platform center subsystem.

The history data includes, for example, history road traffic load, history accident rate, and the like for each determined sub-area. The history data is transmitted to the VIMU, for example, in a form of the area road information table.

Table 8 shows an exemplary area road information table including exemplary history data according to an embodiment of the present disclosure.

This table may include a timestamp, an RSS identifier, the number of intersections, and an intersection history information list. In the intersection history information list DF_IntersectionHistoryList, an intersection identifier, an intersection traffic load (for example, a monthly vehicle load), and an intersection accident rate (for example, an average number of monthly traffic accidents) are listed for the intersection of each sub-area.

**Table 8: area road information table**

| Data classification | Name | Data name | Description |
|---|---|---|---|
| Timestamp | timeStamp | Time | |
| Area road information | rssId | RSS identifier | Identifier of road side system |
| | intersectionNum | Intersection number | |
| | intersectionHistoryList | Intersection history information list | |

### DF_IntersectionHistoryList

| Data classification | Name | Data name | Description |
|---|---|---|---|
| Intersection history information | intersectionId | Intersection identifier | |
| | trafficLoad | Intersection traffic load | Monthly average vehicle load |
| | accidentRate | Intersection accident rate | Average number of monthly traffic accidents |

The method 6000 may also comprise step 6004, where the VIMU allocates virtualized physical resources for each VRSI and reports the resource allocation result.

As described above, the physical resources of the road side infrastructure of the RSS are virtualized and allocated. At least part of the virtualized resources may be allocated to each VRSI based on the VRSI slice type and/or history data for each sub-area. This may include allocating a virtual RSU for each VRSI, and may further include allocating a virtual RSCCU and an associated traffic control device and/or road side sensing device to each VRSI. It may further include allocating an air bearer device for each VRSI.

For an intersection with a high traffic load and high accident rate, more VRSU resources and/or VRSCCU resources can be deployed to support deployment of more road side sensing devices and/or traffic control devices.

The VIMU can report a road side system basic information table including the resource configuration result via a V2X.VIMU.INFO.UP message on the newly-added interface between the VIMU and the Internet of Vehicles cloud control platform center subsystem.

Table 9 shows a road side system basic information table including an exemplary resource configuration result according to an embodiment of the present disclosure.

As shown in table 9, the basic information table may include a timestamp, an RSS identifier, an RSS location, a VRSI number, and a VRSI information list.

In the VRSI information list DF_Vrsilist, a VRSI identifier, an intersection identifier, a VRSU location, a VRSU resource configuration, a VRSCCU identifier, a VRSCCU resource configuration, a sensor device configuration, and a traffic control device configuration are listed for each VRSI. The VRSU location is, for example, longitude and latitude coordinates of an intersection corresponding to the VRSU.

In the RSU resource configuration and VRSCCU resource configuration, an associated virtual CPU configuration, virtual memory configuration, virtual disk configuration, and virtual network configuration are configured for each VRSU and VRSCCU.

In the road side sensing device configuration and traffic control device configuration (DF_DeviceConfigList), a device identifier, a device name, and a device address are listed for each sensing device and each traffic control device.

**Table 9: road side system basic information table**

| Data classification | Name | Data name | Description |
|---|---|---|---|
| Timestamp | timeStamp | Time | |
| RSS basic information | rssId | RSS identifier | Identifier of road side system |
| | rssLocation | RSS location | RSS location information (longitude and latitude ) |
| VRSI basic information | vrsiNum | VRSI number | Number of VRSIs (virtual road side infrastructures) |
| | vrsiList | VRSI information list | |

### DF_VrsiList

| Data classification | Name | Data name | Type | Description |
|---|---|---|---|---|
| VRSI information | vrsiId | VRSI identifier | | Identifier of virtual road side infrastructure |
| | intersectionI d | Intersection identifier | | |
| | vrsuId | VRSU identifier | | Identifier of VRSU |
| | vrsuLocation | VRSU location | | Location information (longitude and latitude ) of VRSU |
| | vrsuResConfig | VRSU resource configuratio n | VResConf igList | |
| | vrsccuId | VRSCCU identifier | | Identifier of virtual road side computing control unit |
| | vrsccuResConf ig | VRSCCU resource configuratio n | VResConf igList | |
| | sensorDeviceC onfig | Sensor device configuratio n | DeviceCo nfigList | connected sensor device identifier list |
| | TrafficContro lDeviceConfig | Traffic control device configuratio n | DeviceCo nfigList | connected traffic control device identifier list |

### DF_VResConfigList

| Data classification | Name | Data name | Type | Description |
|---|---|---|---|---|
| VRes virtual resource configuration | vcpu | Virtual CPU configuration | VcpuConfig | CPU clock rate, number of cores, etc |
| | vmem | Virtual memory configuration | VmemConfig | Memory size, etc |
| | vdisk | Virtual disk configuration | VdiskConfig | Disk size, etc |
| | vnet | Virtual network configuration | VnetConfig | Network bandwidth, IP address, etc |

### DF_DeviceConfigList

| Data classification | Name | Data name | Description |
|---|---|---|---|
| Device configuration information | deviceId | Device identifier | |
| | deviceName | Device name | |
| | deviceIP | Device address | Device IP address and other information for connection |

The method 6000 may also comprise step 6005, where the VIMU starts each VRSI to provide an air road side infrastructure service, and the VRSU reports business data and running information.

Specifically, the VIMU may start the VRSU and VRSCCU of each VRSI to provide the air road side infrastructure services.

Each VRSU can, via an expanded V2X.RSU.INFO.UP message and V2X.RSU.RunningInfo.UP message on an interface between the corresponding RSU and the Internet of Vehicles cloud control platform center subsystem, report business data and running information, respectively.

Each VRSU may perform periodic reporting according to a predetermined period, or may trigger reporting in response to a predetermined event.

Table 10 shows an exemplary RSU information table including exemplary business data according to an embodiment of the present disclosure.

**Table 10: RSU information table (including RSU business data)**

| Data classification | Name | Data name | Description |
|---|---|---|---|
| Timestamp | timeStamp | Time | |
| RSU basic information | rsuId | RSU identifier | Identifier of road side unit |
| | vrsuId | VRSU identifier | Identifier of VRSU |
| | location | Location | Location information, including longitude and latitude data |
| | config | Configuration information | Configuration data of RSU, including its belonging map slice and other information; map and other message sets can refer to a latest application layer data standard released in the industry |
| | rsuStatus | Running status | RSU running status, 1: physical status, 2: virtual status |
| | rsuMode | Running mode | 1: normal, 2: disaster preparedness, 3: temporary emergency |

As shown in Table 10, the RSU business data may include an RSU identifier, a VRSU identifier, and location information, configuration data, a running status, a running mode, etc. of the RSU.

Table 11 shows an RSU running information table including exemplary RSU running information according to an embodiment of the present disclosure.

As shown in Table 11, the RSU running information table may include a timestamp, an RSU identifier, a VRSU identifier, and device running state information. The device running state information includes virtual CPU running information, virtual memory running information, virtual disk running information, and virtual network running information.

**Table 11: RSU running information table (RSU operation management)**

| Data classification | Name | Data name | Type | Description |
|---|---|---|---|---|
| Timestamp | timeTtamp | Time | | |
| RSU basic information | rsuId | RSU identifier | | Identifier of RSU |
| | | vrsuId | VRSU identifier | Identifier of VRSU |
| | runningInfo | Device running status information | RunningInfo | Running information of expanded virtual CPU and other virtual resources |

### DF_RunningInfo

| Name | Whether or not to be selected necessarily | Type | Description |
|---|---|---|---|
| vcpu | Virtual CPU running information | VcpuInfo | Virtual CPU clock rate, number of cores and other running information |
| vmem | Virtual memory running information | VmemInfo | Virtual memory size and other running information |
| vdisk | Virtual disk running information | VdiskInfog | Virtual disk size and other running information |
| vnet | Virtual network running information | VnetInfo | Virtual network bandwidth, IP address and other running information |

Fig. 6 is merely an exemplary resource allocation method for a road side system according to an embodiment of the present disclosure. Various variations of the resource allocation method for the road side system may be envisioned without departing from the teachings of the present disclosure.

In some embodiments, after the devices of the RSS arrives at a site, a location of the RSS itself is determined by its positioning module, and the determined location is reported to the center subsystem along with a running status and running mode of the RSS. The RSS receives transmitted map information and automatically performs determination of sub-areas, deployment of VRSIs and allocation of virtual resources.

In other embodiments, before the devices of the RSS has arrived at a site, a location where the RSS is to be deployed and sub-areas where a VRSI are to be deployed may be pre-specified via the VIMU, for example, by an operator, and resources to be allocated to the VRSI may be specified for each sub-area. Then, software and hardware resources are allocated to the site to provide services according to the pre-plan.

In still other embodiments, resource allocation may be re-performed according to a change in available resources in an actual running process. For example, when some devices of a certain VRSI fail in a running process of the RSS, appropriate resources can be reallocated for each VRSI according to a resource requirement feature of each VRSI and total amount of available resources.

In still other embodiments, resource allocation may be re-performed according to a change in a resource requirement in an actual running process. For example, when a resource requirement of a certain VRSI increases in a running process of the RSS, appropriate resources may be reallocated for each VRSI according to a resource requirement feature of each VRSI and total amount of available resources. For example, more VRSU resources and/or VRSCCU resources are allocated for a VRSI with an increasing resource requirement and reduced VRSU resources and/or VRSCCU resources are allocated for a VRSI with a decreasing resource requirement.

In some embodiments, it may be unnecessary to gather the history data for the sub-areas, i.e., the step 6003 may be omitted. In other embodiments, the cloud control platform may provide the associated history data while providing the map information.

The air platform-based road side system according to the embodiment of the present disclosure can be applied to various scenarios.

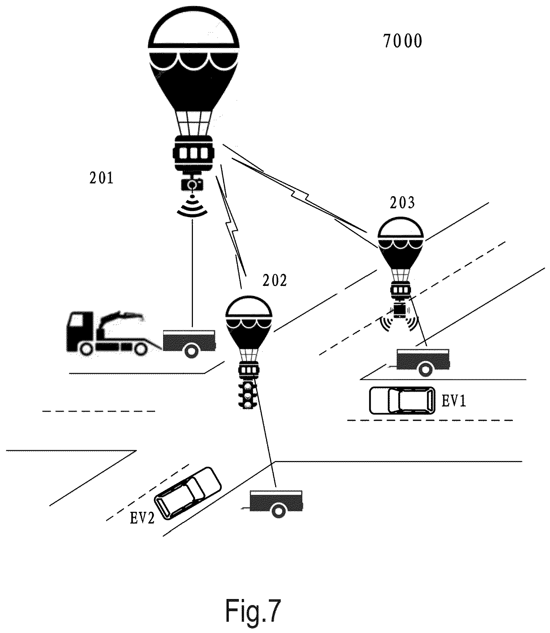

Fig. 7 shows an intersection passing scenario assisted by a road side subsystem 7000 according to an embodiment of the present disclosure.

When a disaster such as earthquake and power blackout occur, this can lead to complete paralysis of all road side infrastructures of an intersection, and then result in traffic confusion, while the air platform-based road side subsystem according to the embodiment of the present disclosure can be used for assisting autonomous vehicles in passing through the intersection in a safe and orderly manner.

The road side subsystem 7000 may be, for example, a portion of the road side system 2000 shown in Fig. 2A which relates to the sub-area 2001 (i.e., the VRSI 2005) . As shown in Fig. 7, this portion includes: a low-altitude tethered aerostat 201 having thereon born an air RSU (more specifically, the virtual RSU 1) and a camera E; two ultra low-altitude tethered aerostats 202 and 203 near a crossroad, the tethered aerostat 202 having thereon born an air traffic light and the tethered aerostat 203 having thereon born an air laser radar.

The road side subsystem 7000 can be used for assisting autonomous vehicles EV1 and EV2 in passing through the intersection in a safe and orderly manner.

Specifically, the vehicles EV1 and EV2 may transmit vehicle travel information to the air RSU (more specifically, the virtual RSU 1), and the air RSU (more specifically, the virtual RSU 1) generates pass scheduling information for scheduling the EV 1 and the EV 2 to pass through the crossroad according to the vehicle travel information, air traffic light information of a target intersection, travel information reported by another vehicle, and road side sensing information of the air laser radar, and transmits the pass scheduling information to the EV 1 and the EV 2 to schedule the EV 1 and the EV 2 to safely pass through the crossroad.

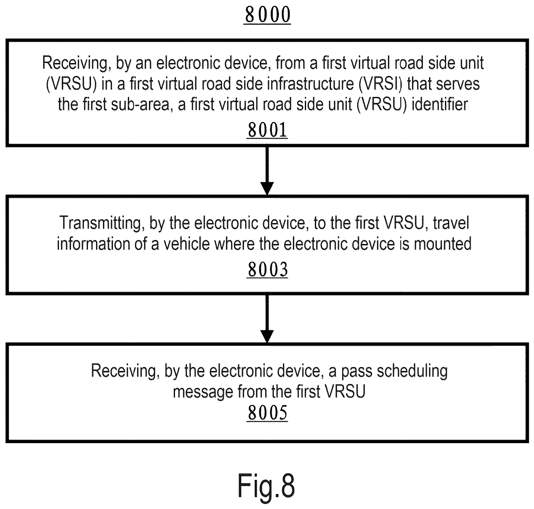

Fig. 8 illustrates an exemplary flow diagram of a method performed by an electronic device according to an embodiment of the present disclosure. The electronic device is, for example, a vehicle-mounted device. The electronic device may also be a separate device that is capable of being coupled and communicating with the vehicle. The electronic device is, for example, a vehicle-mounted device of the vehicle EV1 or EV2 in Fig. 7.

As shown in Fig. 8, a method 8000 may comprise step 8001, where when located within a first sub-area of at least one sub-area within coverage of an air platform-based road side system (RSS), an electronic device receives, from a first virtual road side unit (VRSU) in a first virtual road side infrastructure (VRSI) that serves the first sub-area, a first VRSU identifier.

The first VRSI is, for example, the VRSI 2005 in Fig. 2A, and the first VRSU identifier is, for example, a VRSU identifier allocated for the VRSI 2005.

As described above with reference to Figs. 2A-6, the VRSU identifier may be associated with a VRSI identifier identifying a corresponding VRSI and a virtual infrastructure resource slice type selected for the VRSI. The VRSU identifier may also be associated with a virtual road side computing control unit (VRSCCU) identifier identifying a corresponding VRSCCU. The VRSI identifier, the VRSU identifier, the virtual infrastructure resource slice type, and the VRSCCU identifier are allocated by a VIMU for the VRSI of the corresponding sub-area. The VRSU identifier and the VRSCCU identifier have an associated resource configuration, including at least one of a virtual CPU configuration, a virtual memory configuration, a virtual disk configuration, or a virtual network configuration. The VRSI identifier, the VRSU identifier, the virtual infrastructure resource slice type and the VRSCCU identifier, as well as the associated resource configuration and the like, are reported by the VIMU to an Internet of Vehicles cloud control platform via a newly added message (for example, the V2X.VIMU.INFO.UP interface message) on a newly added interface between the VIMU and the Internet of Vehicles cloud control platform. The VRSI, virtual infrastructure resource slice type, configuration of the VRSU and VRSCCU are configured by the VIMU based on one or more of map information, an application scenario, a resource requirement feature, history data and other factors that are associated with a deployment location of the road side system.

The method 8000 may also comprise step 8003, where the electronic device transmits, to the first VRSU, travel information of a vehicle where the electronic device is mounted. The travel information may include a travel velocity, travel direction, navigation route information, and the like.

The method 8000 may also comprise step 8005, where the electronic device receives a pass scheduling message from the first VRSU, wherein the pass scheduling message comprises the first VRSU identifier, and the pass scheduling message comprises pass scheduling information based on the travel information transmitted by the electronic device and based on at least one of travel information of another vehicle transmitted by another electronic device, road side sensing information from the first VRSI, or traffic light information for a target intersection. The road side sensing information from the first VRSI is obtained, for example, by a road side sensing device of the first VRSI.

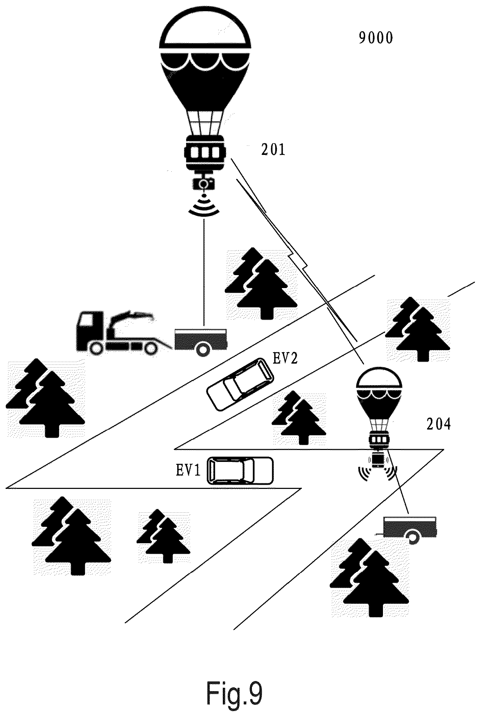

Fig. 9 illustrates a sensing data sharing scenario assisted by a road side subsystem 9000 according to an embodiment of the present disclosure.

The sensing data sharing scenario refers to an area without a road side basic infrastructure in a field rescue, forest disaster relief, geological exploration, field exploration, field vehicle training competition and the like, where there is a need to provide a short-term (such as several days) road side infrastructure service. For example, when a forest fire occurs, a temporary road infrastructure service based on an air disaster preparedness platform is started for fire extinguishing vehicles, material transportation vehicles and the like.

The road side subsystem 9000 may be, for example, the portion of the road side system 2000 shown in Fig. 2A that relates to the sub-area 2005 (i.e., the VRSI 2007) . As shown in Fig. 9, this portion includes: a low-altitude tethered aerostat 201, which has thereon born an air RSU (more specifically, the virtual RSU 2) and a camera F; a ultra low-altitude tethered aerostat 204 near a bend, which has thereon born an air laser radar C. The road side subsystem 9000 may be used for assisting in sensing data sharing of autonomous vehicles EV1 and EV 2.

The vehicle EV1 and air RSU can, by means of sensing devices (sensors such as an air pan/tilt/zoom camera, and an air laser radar etc.) that are mounted on themselves or networked, detect other surrounding traffic participants (including but not limited to vehicles, pedestrians, riders and other target objects), or road abnormality information such as: road traffic events (such as traffic accidents), vehicle abnormal behaviors (speeding, driving away from a lane, wrong-way driving, unconventional driving, abnormal stop, and the like), road obstacles (such as falling rocks, debris loss, and dead branches), and road surface conditions (such as standing water, and icing).

The air RSU (more specifically, the virtual RSU 2) may receive information sensed by the EV1, process the received information sensed by the EV1 and/or information sensed by itself and then obtain driving assistance information, and transmit the driving assistance information to another vehicle in the vicinity of the EV1, such as the subsequent vehicle EV 2. Based on the received driving assistance information, the vehicle EV2 may pre-sense a traffic participant or road abnormality that is not within its own field of view, assisting itself in making a correct driving decision.

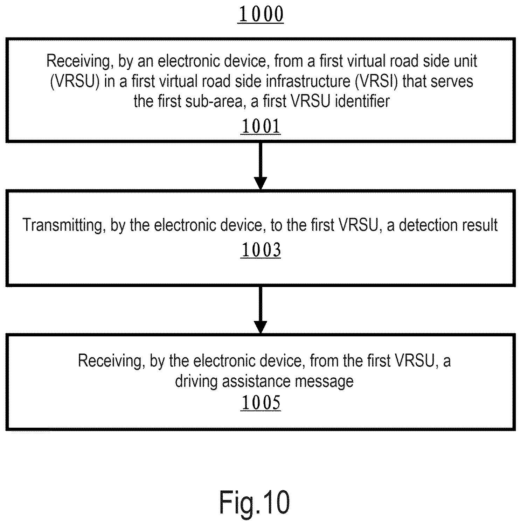

Fig. 10 illustrates an exemplary flow diagram of a method 1000 performed by an electronic device according to an embodiment of the present disclosure. The electronic device is, for example, a vehicle-mounted device. The electronic device may also be a separate device that is capable of being coupled and communicating with a vehicle. The electronic device may be a vehicle-mounted device of the vehicle EV1 or EV2 in Fig. 9.

The method 1000 may comprise step 1001, where when located within a first sub-area of at least one sub-area within coverage of an air platform-based road side system (RSS), an electronic device receives, from a first virtual road side unit (VRSU) in a first virtual road side infrastructure (VRSI) that serves the first sub-area, a first VRSU identifier.

The first VRSI is, for example, the VRSI 2007 in Fig. 2A, and the first VRSU identifier is, for example, the identifier of the VRSU allocated for the VRSI 2007.

The method 1000 may comprise step 1003, where the electronic device transmits, to the first VRSU, a detection result, which comprises driving environment information detected by the electronic device via a sensing device.

The electronic device can perform the detection and the reporting of the detection result according to a certain temporal cycle. The electronic device may also transmit the detection result to the first VRSU upon determining that the detection result shows an anomaly. The electronic device may also transmit the detection result in response to a request of the RSU (more specifically, the virtual RSU 2).

The method 1000 may further comprise step 1005, where the electronic device receives, from the first VRSU, a driving assistance message, which comprises the first VRSU identifier, and comprises driving assistance information based on at least one of a detection result transmitted by another electronic device or the detection result of the first VRSU.

The first VRSU may transmit the driving assistance information only when necessary (for example, only when the first VRSU determines that abnormal environmental information affecting the vehicle travel has occurred). The first VRSU may provide the driving assistance information to an electronic device making a request only when the electronic device requests the information.

It can be understood by those skilled in the art that, in the case where the electronic device has a sensing capability, the step 1003 may be performed. In the case where the electronic device does not have the sensing capability, the step 1003 may not be performed.

In some cases, the electronic device itself has a capability of communication with the RSU (more specifically, the virtual RSU), but another electronic device around it does not have the capability of communication with the RSU, while it can only communicate with this electronic device. In such a case, the electronic device may, to the other electronic device, transmit the driving assistance information received from the RSU or its own detection result.

In some embodiments, the electronic device can also, to the first VRSU, transmit a message including the first VRSU identifier.

For example, in an application scenario of a vehicle payment service assisted by a road side system, an electronic device may, from a first VRSU, receive a payment Action-Request, which includes a first VRSU identifier. In response to this, the electronic device can, to the first VRSU, transmit a vehicle payment message, which can include the first VRSU identifier.

In some embodiments, the vehicle payment message may include an Action-Response, which may define a response message of a vehicle to the payment Action-Request initiated by the first VRSU, which includes an identifier of this vehicle, the first VRSU identifier, payment information, and an operation status of the payment Action-Request, etc.

In some embodiments, the vehicle payment message may include a vehicle service indication (VSI), which includes the first VRSU identifier.

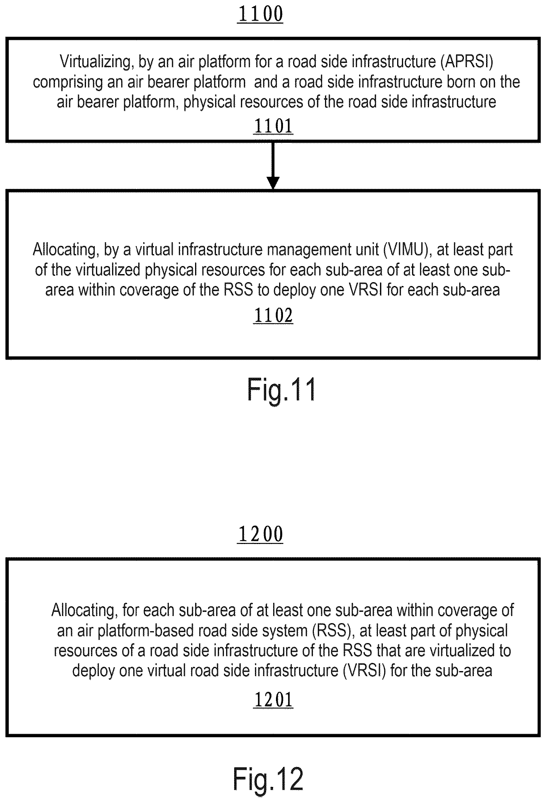

Fig. 11 illustrates an exemplary flow diagram of a method 1100 performed by an air platform-based road side system (RSS) according to an embodiment of the present disclosure.

As shown in Fig. 11, the method 1100 comprises an operation 1101, where an air platform for a road side infrastructure (APRSI) comprising an air bearer platform and a road side infrastructure born on the air bearer platform virtualizes physical resources of the road side infrastructure.

The method 1100 may further comprise an operation 1103, where a virtual infrastructure management unit (VIMU) allocates at least part of the virtualized physical resources for each sub-area of at least one sub-area within coverage of the RSS to deploy one VRSI for each sub-area, each VRSI at least comprising one virtual road side unit (VRSU), each VRSU comprising at least part of physical resources (including hardware resources and software resources) of a road side unit (RSU) that are virtualized.

Fig. 12 illustrates an exemplary flow diagram of a method 1200 performed by a VIMU according to an embodiment of the present disclosure.

As shown in Fig. 12, the method 1200 comprises step 1201, where at least part of physical resources of a road side infrastructure of an air platform-based road side system (RSS) that are virtualized is allocated for each sub-area of at least one sub-area within coverage of the RSS to deploy one virtual road side infrastructure (VRSI) for the sub-area, each VRSI at least comprising a virtual road side unit (VRSU), each VRSU comprising at least part of physical resources (including hardware resources and software resources) of a road side unit (RSU) that are virtualized.

### Exemplary implementations of the present disclosure

According to embodiments of the present disclosure, various implementations of implementing the concepts of the present disclosure can be contemplated, including but not limited to:
1. An electronic device, comprising:
   a memory having thereon stored computer-executable instructions; and
   a processor coupled with the memory and configured to execute the computer-executable instructions to:
      when located within a first sub-area of at least one sub-area within coverage of an air platform-based road side system (RSS), receive a first virtual road side unit (VRSU) identifier from a first VRSU in a first virtual road side infrastructure (VRSI) that serves the first sub-area.
2. The electronic device according to article 1, wherein by virtualizing physical resources of a road side infrastructure of the RSS and allocating at least part of the virtualized physical resources for each sub-area of the at least one sub-area to deploy one VRSI for each sub-area, each VRSI comprises one VRSU, each VRSU comprising at least part of hardware resources and software resources of a road side unit (RSU) that are virtualized, each VRSU having a corresponding VRSU identifier, the at least one sub-area comprising the first sub-area.
3. The electronic device according to article 2, wherein the first VRSU identifier is associated with a first VRSI identifier of the first VRSI and a first virtual road side computing control unit (VRSCCU) identifier,
   wherein the first VRSI comprises a first VRSCCU, the first VRSCCU comprising at least part of hardware resources and software resources of a road side computing control unit that are virtualized, and
   wherein the first VRSU identifier, the first VRSI identifier, and the first VRSCCU identifier are allocated by a virtual infrastructure management unit (VIMU) of the RSS.
4. The electronic device according to article 3, wherein:
   a resource configuration associated with the first VRSU identifier or a resource configuration associated with the first VRSCCU identifier, which is allocated by the VIMU, comprises at least one of: a virtual CPU configuration, a virtual memory configuration, a virtual disk configuration, or a virtual network configuration.
5. The electronic device according to article 3, wherein the first VRSI identifier, the first VRSU identifier, and the first VRSCCU identifier are, via a first interface message on an interface between the VIMU and an Internet of vehicles cloud control platform, reported by the VIMU to the Internet of vehicles cloud control platform.
6. The electronic device according to article 2, wherein the at least one sub-area is determined by the VIMU by the following operation:
   at least based on map information related to a location of the RSS, determining the at least one sub-area within the coverage of the RSS where a VRSI needs to be deployed.
7. The electronic device according to article 6, wherein the map information is, via a second interface message on an interface between the VIMU and an Internet of vehicles cloud control platform, received by the VIMU from the Internet of vehicles cloud control platform.
8. The electronic device according to claim 2, wherein the allocating at least part of the virtualized physical resources for each sub-area of the at least one sub-area to deploy one VRSI for each sub-area comprises the following operation performed by the VIMU:
   based on an application scenario for each sub-area of the at least one sub-area, allocating resources for the VRSI of the sub-area.
9. The electronic device according to claim 2, wherein the allocating at least part of the virtualized physical resources for each sub-area of the at least one sub-area to deploy one VRSI for each sub-area comprises the following operation performed by the VIMU:
   based on history data for each sub-area of the at least one sub-area, allocating resources for the VRSI of the sub-area.
10. The electronic device according to article 2, wherein the first VRSU identifier is associated with a first VRSI identifier of a first VRSI and a first virtual road side infrastructure resource slice type,
   the first VRSU identifier, the first VRSI identifier, and the first virtual road side infrastructure resource slice type being allocated by the VIMU,
   wherein, the virtual road side infrastructure resource slice type is allocated based on a resource requirement feature of the first sub-area.
11. The electronic device according to article 10, wherein the VRSI identifier, the VRSU identifier, and the virtual road side infrastructure resource slice type are, via a third interface message on an interface between the VIMU and an Internet of Vehicles cloud control platform, reported by the VIMU to the Internet of Vehicles cloud control platform.
12. The electronic device according to article 10, wherein the resource requirement feature of the first sub-area comprise at least one of:
   a latency requirement,
   a bandwidth requirement,
   a computing capability requirement, or
   a storage capability requirement.
13. The electronic device according to article 10, wherein the virtual road side infrastructure resource slice type comprises one of:
   a balance type slice,
   a low-latency type slice,
   a large-bandwidth type slice,
   an intelligent computing type slice,
   a large-storage type slice,
   a high-positioning accuracy type slice, and
   a high-reliability type slice.
14. The electronic device according to article 1, wherein the processor is further configured to:
   transmit, to the first VRSU, travel information of a vehicle where the electronic device is mounted; and
   receive a pass scheduling message from the first VRSU, wherein the pass scheduling message comprises the first VRSU identifier, and the pass scheduling message comprises pass scheduling information based on the travel information transmitted by the electronic device and based on at least one of travel information of another vehicle transmitted by another electronic device, road side sensing information from the first VRSI, or traffic light information of a target intersection.
15. The electronic device according to article 1, wherein the processor is further configured to:
   transmit a detection result to the first VRSU, the detection result comprising driving environment information detected by the electronic device via a sensing device; and
   receive a driving assistance message from the first VRSU, wherein the driving assistance message comprises the first VRSU identifier, and the driving assistance message comprises driving assistance information based on at least one of a detection result transmitted by another electronic device or the detection result of the first VRSU.
16. The electronic device according to article 1, wherein the processor is further configured to:
   transmit, to the first VRSU, a message comprising the first VRSU identifier.
17. The electronic device according to article 1, wherein the first VRSU reports, via a V2X.RSU.INFO.UP message and a V2X.RSU.RunningInfo.UP message on an interface between the RSU associated with the first VRSU and an Internet of Vehicles cloud control platform, business data and running information, respectively.
18. An air platform-based road side system (RSS), comprising:
   an air platform for a road side infrastructure (APRSI) comprising an air bearer facility and a road side infrastructure born on the air bearer facility and configured to virtualize physical resources of the road side infrastructure; and
   a virtual infrastructure management unit (VIMU) configured to allocate at least part of the virtualized physical resources for each sub-area of at least one sub-area within coverage of the RSS to deploy one VRSI for each sub-area, each VRSI at least comprising one virtual road side unit (VRSU), each VRSU comprising at least part of hardware and software resources of a road side unit (RSU) that are virtualized.
19. The RSS according to article 18, wherein each VRSI further comprises one virtual road side computing control unit (VRSCCU), the VRSCCU comprising at least part of hardware resources and software resources of a road side computing control unit that are virtualized.
20. The RSS according to article 18, wherein each VRSI comprises the VRSU, a virtual road side computing control unit (VRSCCU), a traffic control device, and a road side sensing device, wherein the VRSCCU is used for providing access of the traffic control device and the road side sensing device.
21. The RSS according to article 18, wherein the air bearerfacility comprises a tethered aerostat and a supporting facility thereof.
22. The RSS according to article 19, wherein the road side infrastructure comprises one or more of the road side unit, the road side computing control unit, a traffic control device, and a road side sensing device.
23. The RSS according to article 18, wherein the VIMU is further configured to:
   at least based on map information related to a location of the RSS, determine the at least one sub-area within the coverage of the RSS where a VRSI needs to be deployed.
24. The RSS according to article 23, wherein the VIMU is further configured to:
   report, via a first interface message on an interface between the VIMU and an Internet of Vehicles cloud control platform, first system basic information to the Internet of Vehicles cloud control platform, the first system basic information comprising location information, a running status and a running mode of the RSS, and the running status indicating whether the RSS is in a virtual state; and
   receive, via a second interface message on the interface between the VIMU and the Internet of Vehicles cloud control platform, map information from the Internet of Vehicles cloud control platform, the map information being determined at least based on the location information of the RSS.
25. The RSS according to article 23, wherein the VIMU is further configured to:
   based on a resource requirement feature of each sub-area of the at least one sub-area, determine a virtual road side infrastructure resource slice type for the sub-area.
26. The RSS according to article 25, wherein the VIMU is further configured to:
   report, via a third interface message on an interface between the VIMU and an Internet of Vehicles cloud control platform, second system basic information, which comprises a VRSI identifier, as well as a virtual road side infrastructure resource slice type and a VRSU identifier that are associated with the VRSI identifier.
27. The RSS according to article 18, wherein the VIMU is further configured to:
   based on an application scenario for each sub-area of the at least one sub-area, allocate resources for the VRSI of the sub-area.
28. The RSS according to article 18, wherein the VIMU is further configured to:
   receive, via a fourth interface message on an interface between the VIMU and an Internet of vehicles cloud control platform, history data for each sub-area of the at least one sub-area from the Internet of vehicles cloud control platform; and
   based on the history data for each sub-area of the at least one sub-area, allocate resources for the VRSI of the sub-area.
29. The RSS according to article 25, wherein the VIMU is further configured to:
   report, via a fifth interface message on an interface between the VIMU and an Internet of vehicles cloud control platform, third system basic information,
   the third system basic information comprising the VRSI identifier, the associated VRSU identifier, an associated VRSCCU identifier, an associated road side sensing device identifier and an associated traffic control device identifier, and
   the third system basic information further comprising a VRSU resource configuration and a VRSCCU resource configuration, each of the VRSU resource configuration and the VRSCCU resource configuration comprising at least one of: a virtual CPU configuration, a virtual memory configuration, a virtual disk configuration, or a virtual network configuration.
30. The RSS according to article 25, wherein the VRSU is configured to report, via a V2X.RSU.INFO.UP message and a V2X.RSU.RunningInfo.UP message on an interface between the RSU associated with the VRSU and an Internet of Vehicles cloud control platform, business data and running information to the Internet of Vehicles cloud control platform, respectively.
31. The RSS according to article 25, wherein the VRSU is configured to transmit the VRSU identifier of the VRSU to an electronic device within the sub-area which the VRSU serves.
32. The RSS according to article 31, wherein the VRSU is configured to:
   receive, from the electronic device within the sub-area which the VRSU serves, travel information related to a vehicle where the electronic device is mounted;
   generate pass scheduling information based on the received travel information and based on at least one of travel information of another vehicle transmitted by another electronic device within the sub-area which the VRSU serves, road side sensing information from the first VRSI, or traffic light information of a target intersection; and
   transmit, to the electronic device, a pass scheduling message comprising the VRSU identifier of the VRSU and the pass scheduling information.
33. The RSS according to article 31, wherein the VRSU is configured to:
   receive a detection result from the electronic device within the sub-area which the VRSU serves, the detection result comprising driving environment information detected by the electronic device via a sensing device;
   generate driving assistance information based on the received detection result and based on at least one of a detection result transmitted by another electronic device within the sub-area which the VRSU serves or the detection result of the VRSU; and
   transmit, to the electronic device, a driving assistance message comprising the VRSU identifier of the VRSU and the driving assistance information.
34. The RSS according to article 31, wherein the VRSU is configured to:
   receive, from the electronic device within the sub-area which the VRSU serves, a message comprising the VRSU identifier of the VRSU.
35. A virtual infrastructure management unit (VIMU), comprising:
   a memory having thereon stored computer-executable instructions; and
   a processor coupled with the memory and configured to execute the computer-executable instructions to:
      allocate, for each sub-area of at least one sub-area within coverage of an air platform-based road side system (RSS), at least part of physical resources of a road side infrastructure of the RSS that are virtualized, to deploy one virtual road side infrastructure (VRSI) for the sub-area, each VRSI at least comprising a virtual road side unit (VRSU), each VRSU comprising at least part of hardware resources and software resources of a road side unit (RSU) that are virtualized.
36. A method performed by an electronic device, comprising:
   when located within a first sub-area of at least one sub-area within coverage of an air platform-based road side system (RSS), receiving a first virtual road side unit (VRSU) identifier from a first VRSU in a first virtual road side infrastructure (VRSI) that serves the first sub-area.
37. A method performed by an air platform-based road side system (RSS), comprising:
   virtualizing, by an air platform for a road side infrastructure (APRSI) comprising an air bearer platform and a road side infrastructure born on the air bearer platform, physical resources of the road side infrastructure; and
   allocating, by a virtual infrastructure management unit (VIMU), at least part of the virtualized physical resources for each sub-area of at least one sub-area within coverage of the RSS, to deploy one VRSI for each sub-area, each VRSI at least comprising one virtual road side unit (VRSU), each VRSU comprising at least part of hardware resources and software resources of a road side unit (RSU) that are virtualized.
38. A method performed by a virtual infrastructure management unit (VIMU), comprising:
   allocating, for each sub-area of at least one sub-area within coverage of an air platform-based road side system (RSS), at least part of physical resources of a road side infrastructure of the RSS that are virtualized, to deploy one virtual road side infrastructure (VRSI) for the sub-area, each VRSI at least comprising a virtual road side unit (VRSU), each VRSU comprising at least part of hardware resources and software resources of a road side unit (RSU) that are virtualized.
39. A computer storage medium having thereon stored computer-executable instructions which, when executed by a processor, perform the method according to any of articles 36-38.
40. A computer program product, comprising computer-executable instructions which, when executed by a processor, perform the method according to any of articles 36-38.

Application examples according to the present disclosure will be described below.

The techniques of this disclosure can be applied to a variety of products.

The road side unit of the present disclosure may be implemented, for example, using a road side unit (RSU) in an Internet of Vehicles.

The electronic device of the present disclosure may be implemented, for example, using a terminal device.

For example, the terminal device may be implemented as a mobile terminal (such as a smartphone, a tablet personal computer (PC), a notebook PC, a portable game terminal, a portable/dongle-type mobile router, and a digital camera device), or a vehicle-mounted terminal (such as a car navigation device). The terminal device may also be implemented as a terminal that performs machine-to-machine (M2M) communication (also referred to as a machine type communication (MTC) terminal). Furthermore, the terminal device may be a radio communication module (such as an integrated circuit module including a single chip) mounted on each of the above terminals.

### [Application example with respect to RSU ]

### (First application example)

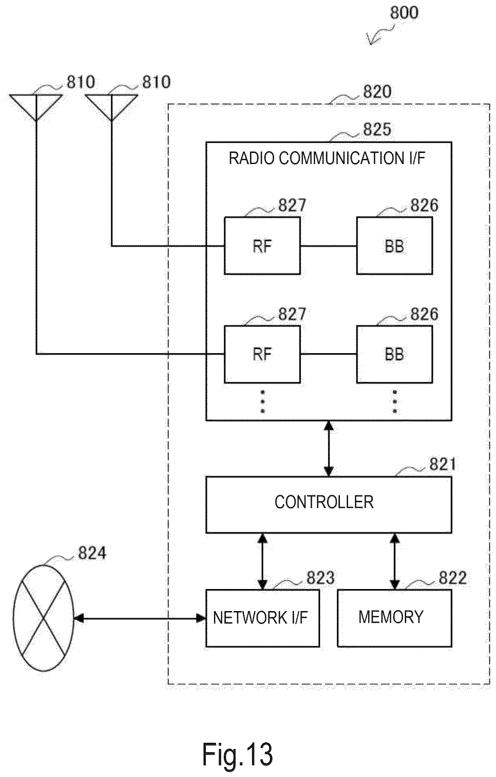

Fig. 13 is a block diagram illustrating a first example of a schematic configuration of an RSU to which the technique of this disclosure can be applied. The RSU 800 includes one or more antennas 810 and a road side device 820. The road side device 820 and each antenna 810 may be connected to each other via an RF cable.

Each of the antennas 810 includes a single or plurality of antenna element(s) (such as a plurality of antenna elements included in a multiple-input multiple-output (MIMO) antenna), and is used for the road side device 820 to transmit and receive radio signals. As shown in Fig. 13, the RSU 800 may include a plurality of antennas 810. For example, the plurality of antennas 810 may be compatible with a plurality of frequency bands used by the RSU 800. The road side device 820 includes a controller 821, memory 822, a network interface 823, and a radio communication interface 825.

The controller 821 may be, for example, a CPU or a DSP, and operates various functions of higher layers of the road side device 820. For example, the controller 821 generates a data packet according to data in a signal processed by the radio communication interface 825 and transmits the generated packet via the network interface 823. The controller 821 may bundle data from a plurality of baseband processors to generate a bundle packet, and transmits the generated bundle packet. The controller 821 may have a logical function of performing the following control: such as radio resource control, radio bearer control, mobility management, admission control and scheduling. This control may be performed in conjunction with a nearby RSU or core network node (for example, an access and mobility management function (AMF)). The memory 822 includes a RAM and a ROM, and stores a program executed by the controller 821 and various types of control data (such as a terminal list, transmission power data, and scheduling data).

The network interface 823 is a communication interface for connecting the road side device 820 to a core network 824. The controller 821 may communicate with a core network node or another RSU via the network interface 823. In this case, the RSU 800 and the core network node or other RSU may be connected to each other through a logical interface (such as a C-V2X uu interface, C-V2X PC5). The network interface 823 may also be a wired communication interface or a radio communication interface for a radio backhaul line. If the network interface 823 is a radio communication interface, the network interface 823 may use a higher frequency band for radio communication, compared to a frequency band used by the radio communication interface 825.

The radio communication interface 825 supports any cellular communication solution, and provides a radio connection to a terminal located in a cell of the RSU 800 via the antenna 810. The radio communication interface 825 may generally include, for example, a baseband (BB) processor 826 and an RF circuit 827. The BB processor 826 may perform, for example, encoding/decoding, modulation/demodulation, and multiplexing/demultiplexing, and perform various types of signal processing for layers (for example, L1, medium access control (MAC), radio link control (RLC), and packet data convergence protocol (PDCP)). In place of the controller 821, the BB processor 826 may have part or all of the above logic functions . The BB processor 826 may be a memory storing a communication control program, or a module including a processor configured to execute a program and a related circuit. Updating the program may make function of the BB processor 826 change. The module may be a card or blade inserted into a slot of the road side device 820. Alternatively, the module may be a chip mounted on a card or blade. Meanwhile, the RF circuit 827 may include, for example, a mixer, a filter, and an amplifier, and transmits and receives radio signals via the antenna 810.

As shown in Fig. 13, the radio communication interface 825 may include a plurality of BB processors 826. For example, the plurality of BB processors 826 may be compatible with the plurality of frequency bands used by the RSU 800. As shown in Fig. 13, the radio communication interface 825 may include a plurality of RF circuits 827. For example, the plurality of RF circuits 827 may be compatible with the plurality of antenna elements. Although Fig. 13 shows the example where the radio communication interface 825 includes the plurality of BB processors 826 and the plurality of RF circuits 827, the radio communication interface 825 may include a single BB processor 826 or a single RF circuit 827.

### (Second application example)

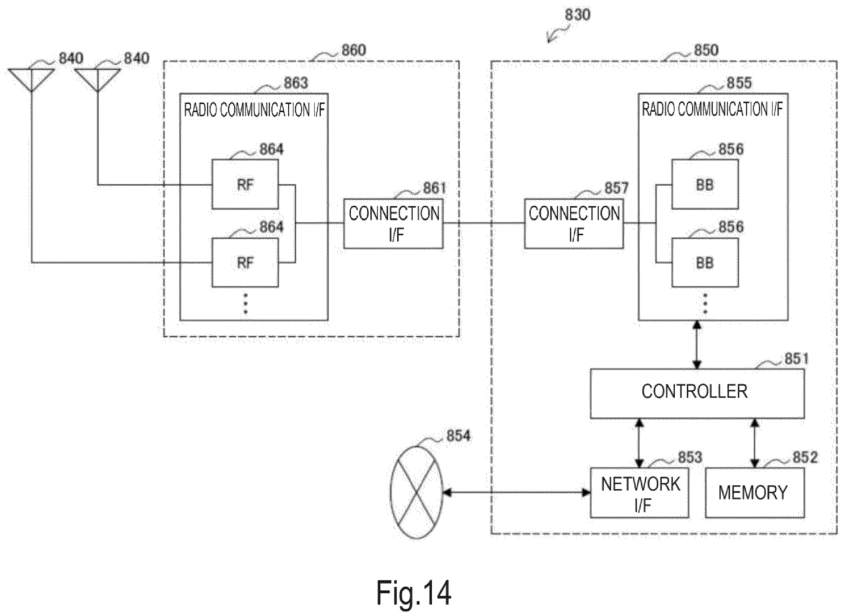

Fig. 14 is a block diagram illustrating a second example of a schematic configuration of an RSU to which the technique of this disclosure can be applied. The RSU includes one or more antennas 840, a road side device 850, and an RRH 860. The RRH 860 and each antenna 840 may be connected to each other via an RF cable. The road side device 850 and the RRH 860 may be connected to each other via a high-speed line such as an optical fiber cable.

Each of the antennas 840 includes a single or plurality of antenna element(s) (such as a plurality of antenna elements included in an MIMO antenna) and is used for the RRH 860 to transmit and receive radio signals. As shown in Fig. 14, the RSU 830 may include a plurality of antennas 840. For example, the plurality of antennas 840 may be compatible with a plurality of frequency bands used by the RSU 830. The road side device 850 includes a controller 851, memory 852, a network interface 853, a radio communication interface 855, and a connection interface 857. The controller 851, the memory 852 and the network interface 853 are the same as the controller 821, the memory 822 and the network interface 823 described with reference to Fig. 13.

The radio communication interface 855 supports any cellular communication solution and provides, via the RRH 860 and the antenna 840, radio communication to a terminal located in a sector corresponding to the RRH 860. The radio communication interface 855 may generally include, for example, a BB processor 856. The BB processor 856 is the same as the BB processor 826 described with reference to Fig. 13, other than the BB processor 856 being connected to an RF circuit 864 of the RRH 860 via a connection interface 857. As shown in Fig. 14, the radio communication interface 855 may include a plurality of BB processors 856. For example, the plurality of BB processors 856 may be compatible with the plurality of frequency bands used by the RSU 830. Although Fig. 14 shows the example where the radio communication interface 855 includes the plurality of BB processors 856, the radio communication interface 855 may also include a single BB processor 856.

The connection interface 857 is an interface for connecting the road side device 850 (the radio communication interface 855) to the RRH 860. The connection interface 857 may also be a communication module for communication in the above high-speed line connecting the road side device 850 (the radio communication interface 855) to the RRH 860.

The RRH 860 includes a connection interface 861 and a radio communication interface 863.

The connection interface 861 is an interface for connecting the RRH 860 (the radio communication interface 863) to the road side device 850. The connection interface 861 may also be a communication module for communication in the above high-speed line.

The radio communication interface 863 transmits and receives radio signals via the antenna 840. The radio communication interface 863 may generally include, for example, the RF circuit 864. The RF circuit 864 may include, for example, a mixer, a filter, and an amplifier, and transmits and receives radio signals via the antenna 840. As shown in Fig. 14, the radio communication interface 863 may include a plurality of RF circuits 864. For example, the plurality of RF circuits 864 may support the plurality of antenna elements. Although Fig. 14 shows the example where the radio communication interface 863 includes the plurality of RF circuits 864, the radio communication interface 863 may include a single RF circuit 864.

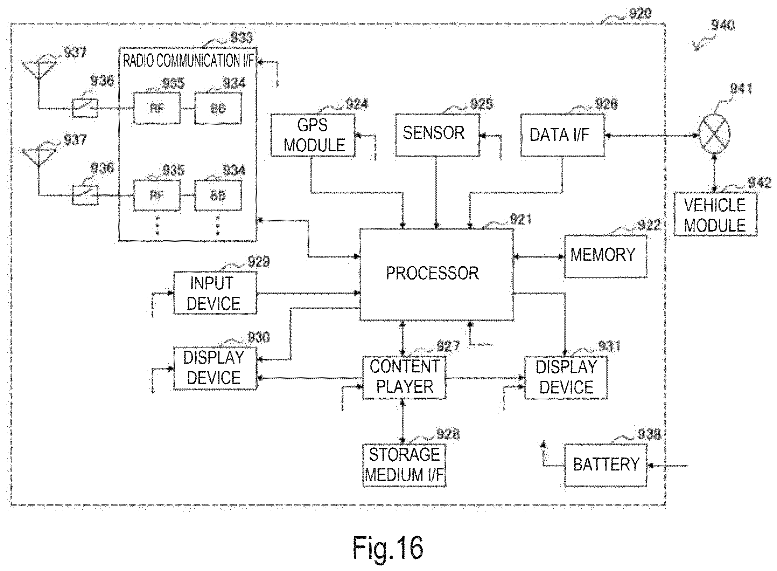

In the RSUs 800 and 830 shown in Figs. 13 and 14, one or more components included in the processing circuit 1310 described with reference to Fig. 13 and the processing circuit 1610 described with reference to Fig. 16 may be implemented in the radio communication interface 912. Alternatively, at least part of these components may also be implemented by the controllers 821 and 851.

### [Application example with respect to terminal device]

### (First application example)

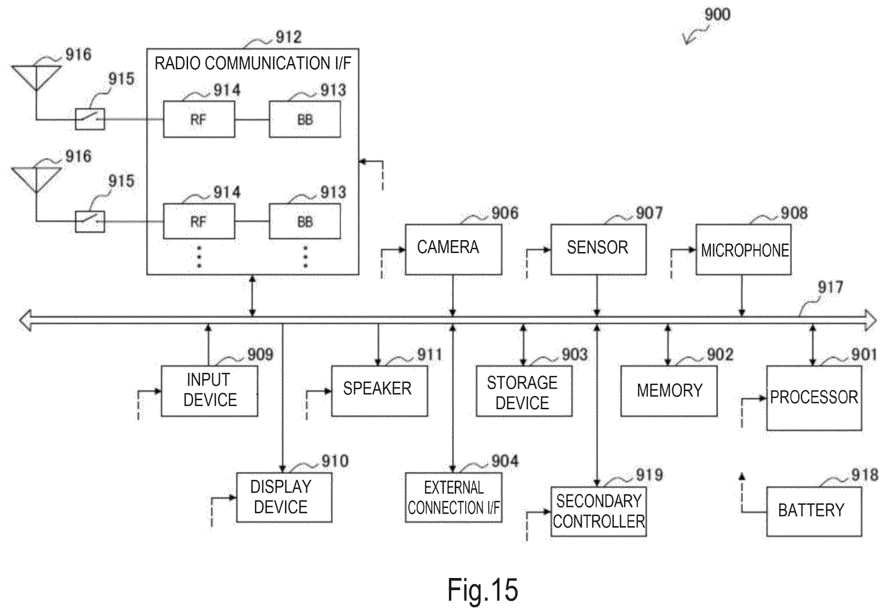

Fig. 15 is a block diagram illustrating an example of a schematic configuration of a smartphone 900 to which the technique of this disclosure can be applied. The smartphone 900 includes a processor 901, a memory 902, a storage device 903, an external connection interface 904, a camera device 906, a sensor 907, a microphone 908, an input device 909, a display device 910, a speaker 911, a radio communication interface 912, one or more antenna switches 915, one or more antennas 916, a bus 917, a battery 918, and a secondary controller 919.

The processor 901 may be, for example, a CPU or a system on a chip (SoC), and controls functions of an application layer and another layer of the smartphone 900. The memory 902 includes a RAM and a ROM, and stores data and a program executed by the processor 901. The storage device 903 may include a storage medium such as a semiconductor memory and a hard disk. The external connection interface 904 is an interface for connecting an external device (such as a memory card and a universal serial bus (USB) device) to the smartphone 900.

The camera device 906 includes an image sensor (such as a charge coupled device (CCD) and a complementary metal oxide semiconductor (CMOS)), and generates a captured image. The sensor 907 may include a set of sensors such as a measurement sensor, a gyro sensor, a geomagnetic sensor, and an acceleration sensor. The microphone 908 converts sound input to the smartphone 900 into an audio signal. The input device 909 includes, for example, a touch sensor configured to detect a touch on a screen of the display device 910, a keypad, a keyboard, a button, or a switch, and receives an operation or information input from a user. The display device 910 includes a screen (such as a liquid crystal display (LCD) and an organic light emitting diode (OLED) display), and displays an output image of the smartphone 900. The speaker 911 converts an audio signal output from the smartphone 900 into sound.

The radio communication interface 912 supports any cellular communication solution (such as LTE and LTE-advanced) and performs radio communication. The radio communication interface 912 may generally include, for example, a BB processor 913 and RF circuit 914. The BB processor 913 can perform, for example, encoding/decoding, modulation/demodulation, and multiplexing/demultiplexing, and perform various types of signal processing for radio communication. Meanwhile, the RF circuit 914 may include, for example, a mixer, a filter, and an amplifier, and transmits and receives radio signals via the antenna 916. The radio communication interface 912 may be one chip module having the BB processor 913 and the RF circuit 914 integrated thereon. As shown in Fig. 15, the radio communication interface 912 may include a plurality of BB processors 913 and a plurality of RF circuits 914. Although Fig. 15 shows the example where the radio communication interface 912 includes the plurality of BB processors 913 and the plurality of RF circuits 914, the radio communication interface 912 may also include a single BB processor 913 or a single RF circuit 914.

Furthermore, the radio communication interface 912 may support another type of radio communication solution, such as a short-range radio communication solution, a near field communication solution, and a wireless local area network (LAN) solution, in addition to the cellular communication solution. In this case, the radio communication interface 912 may include a BB processor 913 and an RF circuit 914 for each radio communication solution.

Each of the antenna switches 915 switches a connection destination of the antenna 916 between a plurality of circuits (for example, circuits for different radio communication solutions) included in the radio communication interface 912.

Each of the antennas 916 includes a single or plurality of antenna element(s) (such as a plurality of antenna elements included in an MIMO antenna) and is used for the radio communication interface 912 to transmit and receive radio signals. As shown in Fig. 15, the smartphone 900 may include a plurality of antennas 916. Although Fig. 15 shows the example where the smartphone 900 includes the plurality of antennas 916, the smartphone 900 may also include a single antenna 916.

Furthermore, the smartphone 900 may include an antenna 916 for each radio communication solution. In this case, the antenna switch 915 may be omitted from the configuration of the smartphone 900.

The bus 917 connects the processor 901, the memory 902, the storage device 903, the external connection interface 904, the camera device 906, the sensor 907, the microphone 908, the input device 909, the display device 910, the speaker 911, the radio communication interface 912, and the secondary controller 919 to each other. The battery 918 provides power to the various blocks of the smartphone 900 shown in Fig. 15 via a feeder, which is partially shown as a dashed line in the figure. The secondary controller 919 operates minimum necessary functions of the smartphone 900, for example, in a sleep mode.

In the smartphone 900 shown in Fig. 15, one or more components included in the processing circuit 1310 described with reference to Fig. 13 and the processing circuit 1610 described with reference to Fig. 16 may be implemented in the radio communication interface 912. Alternatively, at least part of these components may also be implemented by the processor 901 or the secondary controller 919.

### (Second application example)

Fig. 16 is a block diagram illustrating an example of a schematic configuration of a car navigation device 920 to which the technique of this disclosure can be applied. The car navigation device 920 includes a processor 921, a memory 922, a global positioning system (GPS) module 924, a sensor 925, a data interface 926, a content player 927, a storage medium interface 928, an input device 929, a display device 930, a speaker 931, a radio communication interface 933, one or more antenna switches 936, one or more antennas 937, and a battery 938.

The processor 921 may be, for example, a CPU or an SoC, and controls a navigation function and another function of the car navigation device 920. The memory 922 includes a RAM and a ROM, and stores data and a program executed by the processor 921.

The GPS module 924 measures a location (such as latitude, longitude, and altitude) of the car navigation device 920 using a GPS signal received from a GPS satellite. The sensor 925 may include a set of sensors such as a gyro sensor, a geomagnetic sensor, and an air pressure sensor. The data interface 926 is, via a terminal not shown, connected to, for example, a car-mounted network 941, and acquires data (such as vehicle velocity data) generated by a vehicle.

The content player 927 reproduces content stored in a storage medium (such as a CD and a DVD), which is inserted into the storage medium interface 928. The input device 929 includes, for example, a touch sensor configured to detect a touch on a screen of the display device 930, a button, or a switch, and receives an operation or information input from a user. The display device 930 includes a screen such as an LCD or an OLED display, and displays an image of a navigation function or reproduced content. The speaker 931 outputs sound of the navigation function or reproduced content.

The radio communication interface 933 supports any cellular communication solution (such as LTE and LTE-advanced) and performs radio communication. The radio communication interface 933 can generally include, for example, a BB processor 934 and RF circuit 935. The BB processor 934 may perform, for example, encoding/decoding, modulation/demodulation, and multiplexing/demultiplexing, and perform various types of signal processing for radio communication. Meanwhile, the RF circuit 935 may include, for example, a mixer, a filter, and an amplifier, and transmit and receive radio signals via the antenna 937. The radio communication interface 933 can also be one chip module having the BB processor 934 and RF circuit 935 integrated thereon. As shown in Fig. 16, the radio communication interface 933 can include a plurality of BB processors 934 and a plurality of RF circuits 935. Although Fig. 16 shows the example where the radio communication interface 933 includes the plurality of BB processors 934 and the plurality of RF circuits 935, the radio communication interface 933 may also include a single BB processor 934 or a single RF circuit 935.

Furthermore, the radio communication interface 933 may support another type of radio communication solution, such as a short-range radio communication solution, a near field communication solution, and a wireless LAN solution, in addition to the cellular communication solution. In this case, the radio communication interface 933 can include the BB processor 934 and RF circuit 935 for each radio communication solution.

Each of the antenna switches 936 switches a connection destination of the antenna 937 between a plurality of circuits (such as circuits for different radio communication solutions) included in the radio communication interface 933.

Each of the antennas 937 includes a single or plurality of antenna element(s) (such as a plurality of antenna elements included in an MIMO antenna), and is used for the radio communication interface 933 to transmit and receive radio signals. As shown in Fig. 16, the car navigation device 920 may include a plurality of antennas 937. Although Fig. 16 shows the example where the car navigation device 920 includes the plurality of antennas 937, the car navigation device 920 may include a single antenna 937.

Furthermore, the car navigation device 920 may include an antenna 937 for each radio communication solution. In this case, the antenna switch 936 may be omitted from the configuration of the car navigation device 920.

The battery 938 provides power to the various blocks of the car navigation device 920 shown in Fig. 16 via a feeder, which is partially shown as a dashed line in the figure. The battery 938 accumulates power supplied from the vehicle.

In the car navigation device 920 shown in Fig. 16, one or more components included in the processing circuit 1910 described with reference to Fig. 19 may be implemented in the radio communication interface 912. Alternatively, at least part of these components may also be implemented by the processor 921.

The techniques of this disclosure may also be implemented as a car-mounted system (or vehicle) 940 including the car navigation device 920, the car-mounted network 941, and one or more of the blocks of the vehicle module 942. The vehicle module 942 generates vehicle data (such as vehicle velocity, engine velocity, and fault information), and outputs the generated data to the car-mounted network 941.

It should be appreciated that reference to "an embodiment" or similar expressions in this description refers to a specific feature, structure, or characteristic described in conjunction with the embodiment being included in at least one specific embodiment of the present disclosure. Thus, in this description, appearances of the phrase "in an embodiment of the present disclosure" and similar expressions do not necessarily refer to the same embodiment.

Those skilled in the art should appreciate that the present disclosure may be implemented as a system, apparatus, method, or computer-readable storage medium (e.g., non-transient storage medium) as a computer program product. Accordingly, the present disclosure may be implemented in various forms, such as an entire hardware embodiment, an entire software embodiment (including firmware, resident software, micro-program code, etc.), or in a form of software and hardware implementations, which may be hereinafter referred to as a "circuit", "module" or "system". Furthermore, the present disclosure may also be, in any tangible media form, implemented as a computer program product having computer-usable program code stored thereon.

The relevant statement of the present disclosure is described with reference to the flow diagrams and/or block diagrams of the system, apparatus, method and computer program product according to the specific embodiments of the present disclosure. It can be understood that each block in each flow diagram and/or block diagram, and any combination of blocks in the flow diagram and/or block diagram, can be implemented using computer program instructions. These computer program instructions may be executed by a machine formed by a processor of a universal computer or special computer or another programmable data processing apparatus, and the instructions are processed via the computer or other programmable data processing apparatus, so as to implement the functions or operations specified in the flow diagram and/or block diagram.

In the accompanying drawings, the flow diagrams and block diagrams of the architecture, functions, and operations that can be implemented by the system, apparatus, method and computer program product according to various embodiments of the present disclosure are shown. Therefore, each block in the flow diagram or block diagram may represent a module, segment, or part of program code, which includes one or more executable instructions to implement the specified logical function. In addition, it should be noted that, in some other embodiments, the functions described in the block may not be performed in the order shown in the figure. For example, two blocks in succession that are shown in a figure may, in fact, be executed concurrently, or according to functions involved, they may, in some cases, be executed in an order opposite to that noted in the figure. Furthermore, it should also be noted that each block of the block diagram and/or flow diagram, and a combination of blocks in the block diagram and/or flow diagram, can be implemented by a dedicated hardware-based system, or specified functions or operations are performed by a combination of dedicated hardware and computer instructions.

The embodiments of the present disclosure have been described above, wherein the above description is exemplary rather than exhaustive, and not limited to the embodiments disclosed. Many modifications and variations will be apparent to those of ordinary skill in the art without departing from the scope and spirit of the described embodiments. The selection of the terms used herein is intended to best explain principles of the embodiments, practical applications, or technical improvements to market technology, or to enable others of ordinary skill in the art to understand the embodiments disclosed herein.

## Claims

1. An electronic device, comprising:
a memory having thereon stored computer-executable instructions; and
a processor coupled with the memory and configured to execute the computer-executable instructions to:
when located within a first sub-area of at least one sub-area within coverage of an air platform-based road side system (RSS), receive a first virtual road side unit (VRSU) identifier from a first VRSU in a first virtual road side infrastructure (VRSI) that serves the first sub-area.

2. The electronic device according to claim 1, wherein by virtualizing physical resources of a road side infrastructure of the RSS and allocating at least part of the virtualized physical resources for each sub-area of the at least one sub-area to deploy one VRSI for each sub-area, each VRSI comprises one VRSU, each VRSU comprising at least part of hardware resources and software resources of a road side unit (RSU) that are virtualized, each VRSU having a corresponding VRSU identifier, the at least one sub-area comprising the first sub-area.

3. The electronic device according to claim 2, wherein, the first VRSU identifier is associated with a first VRSI identifier of the first VRSI and a first virtual road side computing control unit (VRSCCU) identifier,
Wherein, the first VRSI comprises a first VRSCCU, the first VRSCCU comprising at least part of hardware resources and software resources of a road side computing control unit that are virtualized, and
Wherein, the first VRSU identifier, the first VRSI identifier, and the first VRSCCU identifier are allocated by a virtual infrastructure management unit (VIMU) of the RSS.

4. The electronic device according to claim 3, wherein:
a resource configuration associated with the first VRSU identifier or a resource configuration associated with the first VRSCCU identifier, which is allocated by the VIMU, comprises at least one of: a virtual CPU configuration, a virtual memory configuration, a virtual disk configuration, or a virtual network configuration.

5. The electronic device according to claim 3, wherein, the first VRSI identifier, the first VRSU identifier, and the first VRSCCU identifier are, via a first interface message on an interface between the VIMU and an Internet of vehicles cloud control platform, reported by the VIMU to the Internet of vehicles cloud control platform.

6. The electronic device according to claim 2, wherein, the at least one sub-area is determined by the VIMU by:
at least based on map information related to a location of the RSS, determining the at least one sub-area within the coverage of the RSS where a VRSI needs to be deployed.

7. The electronic device according to claim 6, wherein, the map information is, via a second interface message on an interface between the VIMU and an Internet of vehicles cloud control platform, received by the VIMU from the Internet of vehicles cloud control platform.

8. The electronic device according to claim 2, wherein, the allocating at least part of the virtualized physical resources for each sub-area of the at least one sub-area to deploy one VRSI for each sub-area comprises the following operation performed by the VIMU:
based on an application scenario for each sub-area of the at least one sub-area, allocating resources for the VRSI of the sub-area.

9. The electronic device according to claim 2, wherein, the allocating at least part of the virtualized physical resources for each sub-area of the at least one sub-area to deploy one VRSI for each sub-area comprises the following operation performed by the VIMU:
based on history data for each sub-area of the at least one sub-area, allocating resources for the VRSI of the sub-area.

10. The electronic device according to claim 2, wherein, the first VRSU identifier is associated with the first VRSI identifier of the first VRSI and a first virtual road side infrastructure resource slice type,
the first VRSU identifier, the first VRSI identifier, and the first virtual road side infrastructure resource slice type being allocated by the VIMU,
wherein, the virtual road side infrastructure resource slice type is allocated based on a resource requirement feature of the first sub-area.

11. The electronic device according to claim 10, wherein the VRSI identifier, the VRSU identifier, and the virtual road side infrastructure resource slice type are, via a third interface message on an interface between the VIMU and an Internet of Vehicles cloud control platform, reported by the VIMU to the Internet of Vehicles cloud control platform.

12. The electronic device according to claim 10, wherein, the resource requirement feature of the first sub-area comprise at least one of:
a latency requirement,
a bandwidth requirement,
a computing capability requirement, or
a storage capability requirement.

13. The electronic device according to claim 10, wherein, the virtual road side infrastructure resource slice type comprises one of:
a balance type slice,
a low-latency type slice,
a large-bandwidth type slice,
an intelligent computing type slice,
a large-storage type slice,
a high-positioning accuracy type slice, and
a high-reliability type slice.

14. The electronic device according to claim 1, wherein, the processor is further configured to:
transmit, to the first VRSU, travel information of a vehicle where the electronic device is mounted; and
receive a pass scheduling message from the first VRSU, wherein the pass scheduling message comprises the first VRSU identifier, and the pass scheduling message comprises pass scheduling information based on the travel information transmitted by the electronic device and based on at least one of travel information of another vehicle transmitted by another electronic device, road side sensing information from the first VRSI, or traffic light information of a target intersection.

15. The electronic device according to claim 1, wherein, the processor is further configured to:
transmit a detection result to the first VRSU, the detection result comprising driving environment information detected by the electronic device via a sensing device; and
receive a driving assistance message from the first VRSU, wherein, the driving assistance message comprises the first VRSU identifier, and the driving assistance message comprises driving assistance information based on at least one of a detection result transmitted by another electronic device or the detection result of the first VRSU.

16. The electronic device according to claim 1, wherein, the processor is further configured to:
transmit, to the first VRSU, a message comprising the first VRSU identifier.

17. The electronic device according to claim 1, wherein the first VRSU reports, via a V2X.RSU.INFO.UP message and a V2X.RSU.RunningInfo.UP message on an interface between the RSU associated with the first VRSU and an Internet of Vehicles cloud control platform, business data and running information, respectively.

18. An air platform-based road side system (RSS), comprising:
an air platform for a road side infrastructure (APRSI) comprising an air bearer facility and a road side infrastructure born on the air bearer facility and configured to virtualize physical resources of the road side infrastructure; and
a virtual infrastructure management unit (VIMU) configured to allocate at least part of the virtualized physical resources for each sub-area of at least one sub-area within coverage of the RSS to deploy one VRSI for each sub-area, each VRSI at least comprising one virtual road side unit (VRSU), each VRSU comprising at least part of the hardware and software resources of a road side unit (RSU) that are virtualized.

19. The RSS according to claim 18, wherein, each VRSI further comprises one virtual road side computing control unit (VRSCCU), the VRSCCU comprising at least part of hardware resources and software resources of a road side computing control unit that are virtualized.

20. The RSS according to claim 18, wherein, each VRSI comprises the VRSU, a virtual road side computing control unit (VRSCCU), a traffic control device, and a road side sensing device, wherein the VRSCCU is used for providing access of the traffic control device and the road side sensing device.

21. The RSS according to claim 18, wherein the air bearer facility comprises a tethered aerostat and a supporting facility thereof.

22. The RSS according to claim 19, wherein, the road side infrastructure comprises one or more of the road side unit, the road side computing control unit, a traffic control device, and a road side sensing device.

23. The RSS according to claim 18, wherein, the VIMU is further configured to:
at least based on map information related to a location of the RSS, determine the at least one sub-area within the coverage of the RSS where a VRSI needs to be deployed.

24. The RSS according to claim 23, wherein, the VIMU is further configured to:
report, via a first interface message on an interface between the VIMU and an Internet of Vehicles cloud control platform, first system basic information to the Internet of Vehicles cloud control platform, the first system basic information comprising location information, a running status and a running mode of the RSS, and the running status indicating whether the RSS is in a virtual state; and
receive, via a second interface message on the interface between the VIMU and the Internet of Vehicles cloud control platform, map information from the Internet of Vehicles cloud control platform, the map information being determined at least based on the location information of the RSS.

25. The RSS according to claim 23, wherein, the VIMU is further configured to:
based on a resource requirement feature of each sub-area of the at least one sub-area, determine a virtual road side infrastructure resource slice type for the sub-area.

26. The RSS according to claim 25, wherein, the VIMU is further configured to:
report, via a third interface message on an interface between the VIMU and an Internet of Vehicles cloud control platform, second system basic information, which comprises a VRSI identifier, as well as a virtual road side infrastructure resource slice type and a VRSU identifier that are associated with the VRSI identifier.

27. The RSS according to claim 18, wherein, the VIMU is further configured to:
based on an application scenario for each sub-area of the at least one sub-area, allocate resources for the VRSI of the sub-area.

28. The RSS according to claim 18, wherein, the VIMU is further configured to:
receive, via a fourth interface message on an interface between the VIMU and an Internet of vehicles cloud control platform, history data for each sub-area of the at least one sub-area from the Internet of vehicles cloud control platform; and
based on the history data for each sub-area of the at least one sub-area, allocate resources for the VRSI of the sub-area.

29. The RSS according to claim 25, wherein, the VIMU is further configured to:
report, via a fifth interface message on an interface between the VIMU and an Internet of vehicles cloud control platform, third system basic information,
the third system basic information comprising the VRSI identifier, the associated VRSU identifier, an associated VRSCCU identifier, an associated road side sensing device identifier and an associated traffic control device identifier, and
the third system basic information further comprising a VRSU resource configuration and a VRSCCU resource configuration, each of the VRSU resource configuration and the VRSCCU resource configuration comprising at least one of: a virtual CPU configuration, a virtual memory configuration, a virtual disk configuration, or a virtual network configuration.

30. The RSS according to claim 25, wherein the VRSU is configured to report, via a V2X. RSU. INFO. UP message and a V2X.RSU.RunningInfo.UP message on an interface between the RSU associated with the VRSU and an Internet of Vehicles cloud control platform, business data and running information to the Internet of Vehicles cloud control platform, respectively.

31. The RSS according to claim 25, wherein, the VRSU is configured to transmit the VRSU identifier of the VRSU to an electronic device within the sub-area which the VRSU serves.

32. The RSS according to claim 31, wherein, the VRSU is configured to:
receive, from the electronic device within the sub-area which the VRSU serves, travel information related to a vehicle where the electronic device is mounted;
generate pass scheduling information based on the received travel information and based on at least one of travel information of another vehicle transmitted by another electronic device within the sub-area which the VRSU serves, road side sensing information from the first VRSI, or traffic light information of a target intersection; and
transmit, to the electronic device, a pass scheduling message comprising the VRSU identifier of the VRSU and the pass scheduling information.

33. The RSS according to claim 31, wherein, the VRSU is configured to:
receive a detection result from the electronic device within the sub-area which the VRSU serves, the detection result comprising driving environment information detected by the electronic device via a sensing device;
generate driving assistance information based on the received detection result and based on at least one of a detection result transmitted by another electronic device within the sub-area which the VRSU serves or the detection result of the VRSU; and
transmit, to the electronic device, a driving assistance message comprising the VRSU identifier of the VRSU and the driving assistance information.

34. The RSS according to claim 31, wherein, the VRSU is configured to:
receive, from the electronic device within the sub-area which the VRSU serves, a message comprising the VRSU identifier of the VRSU.

35. A virtual infrastructure management unit (VIMU), comprising:
a memory having thereon stored computer-executable instructions; and
a processor coupled with the memory and configured to execute the computer-executable instructions to:
allocate, for each sub-area of at least one sub-area within coverage of an air platform-based road side system (RSS), at least part of physical resources of a road side infrastructure of the RSS that are virtualized, to deploy one virtual road side infrastructure (VRSI) for the sub-area, each VRSI at least comprising a virtual road side unit (VRSU), each VRSU comprising at least part of hardware resources and software resources of a road side unit (RSU) that are virtualized.

36. A method performed by an electronic device, comprising:
when located within a first sub-area of at least one sub-area within coverage of an air platform-based road side system (RSS), receiving a first virtual road side unit (VRSU) identifier from a first VRSU in a first virtual road side infrastructure (VRSI) that serves the first sub-area.

37. A method performed by an air platform-based road side system (RSS), comprising:
virtualizing, by an air platform for a road side infrastructure (APRSI) comprising an air bearer platform and a road side infrastructure born on the air bearer platform, physical resources of the road side infrastructure; and
allocating, by a virtual infrastructure management unit (VIMU), at least part of the virtualized physical resources for each sub-area of at least one sub-area within coverage of the RSS, to deploy one VRSI for each sub-area, each VRSI at least comprising one virtual road side unit (VRSU), each VRSU comprising at least part of hardware resources and software resources of a road side unit (RSU) that are virtualized.

38. A method performed by a virtual infrastructure management unit (VIMU), comprising:
allocating, for each sub-area of at least one sub-area within coverage of an air platform-based road side system (RSS), at least part of physical resources of a road side infrastructure of the RSS that are virtualized, to deploy one virtual road side infrastructure (VRSI) for the sub-area, each VRSI at least comprising a virtual road side unit (VRSU), each VRSU comprising at least part of hardware resources and software resources of a road side unit (RSU) that are virtualized.

39. A computer storage medium having thereon stored computer-executable instructions which, when executed by a processor, perform the method according to any of claims 36-38.

40. A computer program product, comprising computer-executable instructions which, when executed by a processor, perform the method according to any of claims 36-38.
